# EUROPÄISCHE PATENTSCHRIFT

(11) **EP 3 426 588 B1**
(45) Veröffentlichungstag und Bekanntmachung des Hinweises auf die Patenterteilung: **19.02.2020**
(21) Anmeldenummer: 17708277.3
(22) Anmeldetag: 06.03.2017
(51) Int. Cl.: B66B 23/00

(54) **VORRICHTUNG ZUM ROBOTERUNTERSTÜTZTEN HERSTELLEN EINES TRAGWERKES FÜR EINE PERSONENTRANSPORTANLAGE**
DEVICE FOR PRODUCING A SUPPORT FOR A PERSON TRANSPORT INSTALLATION WITH THE ASSISTANCE OF A ROBOT
DISPOSITIF DE FABRICATION ROBOTISEE D'UNE OSSATURE PORTEUSE POUR UNE INSTALLATION DE TRANSPORT DE PERSONNES

(30) Priorität: 10.03.2016 EP 16159640
(43) Veröffentlichungstag der Anmeldung: 16.01.2019
(73) Patentinhaber: Inventio AG, 6052 Hergiswil (CH)
(72) Erfinder: GARTNER, Manfred, 2603 Felixdorf (AT); SCHÜTZ, Richard, 1100 Wien (AT); KOUKAL, Thomas, 6067 Absam (AT)
(86) Internationale Anmeldenummer: PCT/EP2017/055144
(87) Internationale Veröffentlichungsnummer: WO 2017/153314

(56) Entgegenhaltungen:
- US-A1- 2007 216 133
- DATABASE WPI Week 200977 Thomson Scientific, London, GB; AN 2009-R26074 XP002760795, & CN 201 333 595 Y (XIAMEN SIERT ROBOT SYSTEM CO LTD) 28. Oktober 2009 (2009-10-28)
- DATABASE WPI Week 201479 Thomson Scientific, London, GB; AN 2014-V41280 XP002760796, & CN 203 804 432 U (GUANGZHOU YONGRI ELEVATOR CO LTD) 3. September 2014 (2014-09-03)

## Beschreibung

Die vorliegende Erfindung betrifft eine Vorrichtung zum Herstellen eines Tragwerkes für eine Personentransportanlage wie zum Beispiel eine Fahrtreppe, einen Fahrsteig oder dergleichen.

Personentransportanlagen werden dazu eingesetzt, um Personen beispielsweise in Bauwerken zwischen verschiedenen Höhenniveaus oder innerhalb eines gleichbleibenden Höhenniveaus zu befördern. Fahrtreppen, welche auch als Rolltreppen bezeichnet werden, werden beispielsweise regelmäßig dazu eingesetzt, Personen zum Beispiel in einem Bauwerk von einem Stockwerk zu einem anderen Stockwerk zu befördern. Fahrsteige können dazu eingesetzt werden, Personen zum Beispiel innerhalb eines Stockwerkes in einer horizontalen Ebene oder in einer lediglich geringfügig geneigten Ebene zu befördern.

Personentransportanlagen weisen im Allgemeinen ein Tragwerk auf, welches als lasttragende Struktur dient. Das Tragwerk ist dabei dazu ausgelegt, auf die Personentransportanlage wirkende statische und dynamische Kräfte wie zum Beispiel Gewichtskräfte von transportierten Personen, durch einen Antrieb der Personentransportanlage bewirkte Kräfte und dergleichen mehr aufzunehmen und beispielsweise an tragende Strukturen des die Personentransportanlage aufnehmenden Bauwerkes weiterzuleiten. Hierzu kann die Personentransportanlage an geeignet ausgebildeten Auflagerstellen an dem Bauwerk gelagert und befestigt werden. Je nach Ausgestaltung kann sich das Tragwerk beispielsweise über zwei oder mehrere Ebenen beziehungsweise Stockwerke des Bauwerkes und/oder über kürzere oder längere Distanzen innerhalb eines gleichbleibenden Stockwerkes innerhalb des Bauwerkes erstrecken.

Ein im montierten Zustand an den Auflagerstellen des Bauwerkes abgestütztes Tragwerk kann dabei sowohl bewegbar als auch ortsfest angeordnete Komponenten der Personentransportanlage aufnehmen. Je nach Ausgestaltung der Personentransportanlage als Fahrtreppe oder Fahrsteig können solche Komponenten beispielsweise als Stufenband, Palettenband, Umlenkachsen, Antriebswellen, Antriebsmotor, Getriebe, Steuerung, Überwachungssystem, Sicherheitssystem, Balustraden, Kammplatten, Lagerstellen, Laufband und/oder Führungsschienen ausgebildet sein.

Aus Stabilitätsgründen sowie aus Gewichtsgründen sind Tragwerke für Personentransportanlagen in der Regel als Fachwerkkonstruktion ausgeführt. Ein das Tragwerk bildendes Fachwerk besteht dabei im Regelfall aus zumindest drei Teilen oder Segmenten, welche hierin nachfolgend als Unterteil, Mittelteil und Oberteil bezeichnet werden. Für den Fall, dass das Tragwerk für die Abstützung einer Fahrtreppe dienen soll, sind das Unterteil und das Oberteil jeweils im Allgemeinen als horizontal anzuordnende Teile vorgesehen, wobei das Unterteil beispielsweise in einem tiefer liegenden Bereich eines Bauwerkes und das Oberteil in einem höher liegenden Bereich des Bauwerkes angeordnet werden kann. Das Mittelteil verbindet in diesem Fall das Unterteil und das Oberteil und verläuft hierzu im Allgemeinen in einem schrägen Winkel zur Horizontale durch das Bauwerk.

Es wird jedoch angemerkt, dass die Begriffe Unter-, Mittel- und Oberteil hierin nicht zwangsläufig als eine geometrische Anordnung innerhalb eines Bauwerkes bezeichnend auszulegen sind. Beispielsweise können diese Teile für den Fall, dass das Tragwerk für einen horizontal verlaufenden Fahrsteig vorgesehen ist, auch in einer gleichen Ebene hintereinander und aneinander angrenzend angeordnet sein.

Ein das Tragwerk bildendes Fachwerk einschließlich seines Unterteils, Mittelteils und Oberteils setzt sich im Allgemeinen aus einer Vielzahl von miteinander verbundenen lasttragenden Fachwerkkomponenten zusammen. Solche Fachwerkkomponenten können beispielsweise sogenannte Obergurte und Untergurte sowie diese Gurte untereinander verbindende Querstreben, Diagonalstreben und/oder Steher umfassen. Ferner können ergänzende Strukturen wie unter anderem Knotenbleche, Winkelbleche, Haltebleche, Ölwannenbleche, Untersichtbleche etc. vorgesehen sein.

Um eine ausreichende Stabilität und Lasttragfähigkeit des Tragwerkes gewährleisten zu können, müssen die einzelnen Fachwerkkomponenten ausreichend stabil miteinander verbunden werden. Meist werden die Fachwerkkomponenten zu diesem Zweck miteinander verschweißt. Dabei muss im Regelfall jede einzelne Fachwerkkomponente stabil und lasttragfähig mit anderen Fachwerkkomponenten des Fachwerkes zusammengeschweißt werden.

Herkömmlich wird ein solches Zusammenschweißen der Fachwerkkomponenten größtenteils manuell durchgeführt. Da das Fachwerk der Personentransportanlage letztendlich Personen tragen muss und somit ein sicherheitsrelevantes Bauteil ist, müssen hierfür meist zertifizierte Schweißer eingesetzt werden, welche dann die Fachwerkkomponenten sehr zeitaufwendig miteinander verschweißen. Ein hierbei anfallender erheblicher Arbeits- und Zeitaufwand führt unter anderem zu hohen Fertigungskosten.

Außerdem lässt sich beim manuellen Verschweißen von Fachwerkkomponenten zu im Regelfall sich über viele Meter erstreckenden Fachwerken ein gewisses Verziehen des Fachwerkes, das heißt ein gewisses Abweichen des tatsächlich verschweißten Fachwerkes von einer Soll-Geometrie, häufig nicht vermeiden. Bei einem manuellen Zusammenschweißen der Fachwerkkomponenten muss sich ein Schweißer im Regelfall von einem Ende des herzustellenden Fachwerkes hin zum gegenüberliegenden Ende durcharbeiten. Bei einem solchen fortschreitenden Aufbauvorgang kommt es im Allgemeinen zu einem unregelmäßigen Wärmeeintrag während des Verschweißens, welcher letztendlich das Verziehen des geschweißten Fachwerkes mit sich bringt. Ein solches verzogenes Fachwerk muss vor seiner Installation in einem Bauwerk zunächst gerichtet werden. Hierdurch entstehen zusätzlicher Aufwand und somit erhöhte Kosten.

Ferner können Personentransportanlagen in verschiedenen Ausprägungen herzustellen sein und sich beispielsweise über unterschiedlich lange Distanzen innerhalb eines Bauwerkes erstrecken. Folglich sind nicht alle hierfür herzustellenden Fachwerke genau gleich, sondern können sich beispielsweise insbesondere hinsichtlich eines Neigungswinkels und/oder einer Länge des Mittelteils voneinander unterscheiden. Auch die Längen des Oberteils und/oder des Unterteils können von Auftrag zu Auftrag variieren. Bei der Herstellung und insbesondere dem Verschweißen der Fachwerke für die Personentransportanlagen kann eine solche Vielzahl herzustellender Varianten dazu führen, dass hohe Anforderungen an eine Logistik und insbesondere an die Verschweißung der Fachwerkkomponenten ausführende Schweißer zu stellen sind.

In der EP 1 795 487 B1, EP 1 795 488 B1 und EP 1 795 489 B1 werden ein Verfahren zur werkseitigen Vormontage eines Fahrsystems und eine Montageanlage zur Herstellung eines Fahrsystems sowie ein hierfür einzusetzender Fahrsystemaufnehmer und ein Hubsystem beschrieben. Mithilfe des beschriebenen Verfahrens beziehungsweise unter Einsatz des Fahrsystemaufnehmers und/oder des Hubsystems soll dabei unter anderem eine Vormontage von großen und sperrigen Fahrsystemen besser plan- und vor allem kontrollierbar gemacht werden. Solche Fertigungsstraßen benötigen bei genügender Auslastung eine hohe Anzahl Tragwerke pro Zeiteinheit, wobei dieser hohe Durchsatz durch herkömmlich gefertigte Tragwerke nur mit großem logistischen Aufwand und riesigen Fertigungswerkstätten befriedigt werden kann. CN 201 333 595 Y offenbart eine Vorrichtung zum Schweißen eines Kranteils.

Es kann daher ein Bedarf an einer Vorrichtung und einem mit dieser Vorrichtung auszuführenden Verfahren zum Herstellen eines Tragwerkes für eine Personentransportanlage bestehen, mithilfe derer zumindest einige der einleitend beschriebenen Defizite herkömmlicher Verfahren zur Herstellung von Fachwerken für Personentransportanlagen und zu deren Ausführung eingesetzter Vorrichtungen überwunden werden können. Insbesondere kann ein Bedarf an einer Vorrichtung beziehungsweise einem mit dieser durchzuführenden Verfahren zum Herstellen eines Tragwerkes für eine Personentransportanlage bestehen, welche es erlauben, ein ein solches Tragwerk bildendes Fachwerk einfach, schnell, zuverlässig, kostengünstig und/oder mit hoher Präzision zusammenzubauen.

Einem solchen Bedarf kann mit einer Vorrichtung gemäß dem unabhängigen Patentanspruch entsprochen werden. Vorteilhafte Ausführungsformen der Vorrichtung sind sowohl in den abhängigen Ansprüchen als auch in der nachfolgenden Beschreibung erläutert.

Gemäß einem Aspekt der vorliegenden Erfindung wird eine Vorrichtung zum Herstellen eines Tragwerkes für eine Personentransportanlage beschrieben.

Das Tragwerk weist ein Fachwerk mit einem Unterteil, einem Mittelteil und einem Oberteil auf, welche jeweils aus miteinander verbundenen lasttragenden Fachwerkkomponenten wie Obergurten, Untergurten, Querstreben, Diagonalstreben und Stehern aufgebaut sind.

Die Vorrichtung weist eine sequenzielle Anordnung von teil- oder vollautomatisiert arbeitenden und miteinander kooperierenden Fügestationen auf. Die sequenzielle Anordnung verfügt dabei über wenigstens eine erste und eine zweite Fügestation.

Die erste Fügestation weist wenigstens eine Haltevorrichtung und wenigstens einen Schweißroboter auf. Die Haltevorrichtung ist zum Halten von Fachwerkkomponenten ausgelegt. Der Schweißroboter ist zum Zusammenschweißen der Fachwerkkomponenten jeweils zu Seitenteilen des Unterteils, Seitenteilen des Mittelteils und Seitenteilen des Oberteils des Fachwerkes ausgelegt. Diese werden anschließend in einer zweiten Fügestation mit weiteren Fachwerkkomponenten zumindest zu einer vorpositionierten Fachwerkstruktur, gegebenenfalls auch zu einer endgültigen, lasttragenden Fachwerkstruktur zusammengeschweißt.

Die zweite Fügestation weist vorzugsweise ebenfalls wenigstens eine Haltevorrichtung und wenigstens einen Schweißroboter auf. Die Haltevorrichtung für diese zweite Fügestation ist einerseits zum Halten der Seitenteile des Unterteils, Seitenteile des Mittelteils und Seitenteile des Oberteils und andererseits zum Halten weiterer Fachwerkkomponenten angrenzend angeordnet jeweils zwischen den Seitenteilen des Unterteils, des Mittelteils und des Oberteils, ausgelegt. In den meisten Fällen werden jeweils zwei Seitenteile für das Oberteil, das Mittelteil und das Unterteil benötigt. Der Schweißroboter ist einerseits zum positionierenden Zusammenschweißen der weiteren Fachwerkkomponenten mit den jeweils angrenzend angeordneten Seitenteilen des Unterteils, des Mittelteils beziehungsweise des Oberteils jeweils zu einem vorpositionierten Unterteil, einem vorpositionierten Mittelteil beziehungsweise einem vorpositionierten Oberteil und andererseits zum positionierenden Zusammenschweißen des vorpositionierten Unterteils und des vorpositionierten Oberteils jeweils an entgegengesetzte Enden des vorpositionierten Mittelteils zu einer vorpositionierten Fachwerkstruktur ausgelegt. Die vorpositionierte Fachwerkstruktur beziehungsweise Tagwerkstruktur beinhaltet im Wesentlichen alle Fachwerkkomponenten und weist daher bereits die endgültige Gestalt auf.

Der Schweißroboter der zweiten Fügestation kann aber zusätzlich auch dazu ausgelegt sein, die zuerst vorpositionierte Fachwerkstruktur anschließend lasttragend zusammenzuschweißen. Ein vorangehend positionierendes Zusammenschweißen (auch Heften genannt) hat den Vorteil, dass sich die einzelnen Bauteile beim lasttragenden Zusammenschweißen (Herstellen der lasttragenden Schweißnähte) gegenseitig in Form halten und ein Verziehen der Bauteile durch den hohen Wärmeeintrag beim Herstellen der lasttragenden Schweißnähte verhindert wird.

Um den Durchsatz der zweiten Fügestufe zu erhöhen, umfasst die Vorrichtung zum Herstellen eines Tragwerkes vorzugsweise eine dritte Fügestation, die wiederum eine Haltevorrichtung und wenigstens einen Schweißroboter aufweist. Die Haltevorrichtung für diese dritte Fügestation ist zum Halten der vorpositionierten Fachwerkstruktur ausgelegt. Der Schweißroboter dieser dritten Fügestation ist zum lasttragenden Zusammenschweißen der Fachwerkkomponenten der gesamten vorpositionierten Fachwerkstruktur zu dem lasttragfähigen Fachwerk ausgelegt.

Knapp zusammengefasst können mögliche Merkmale und Vorteile von Ausführungsformen der Erfindung unter anderem und ohne die Erfindung einzuschränken als auf nachfolgend beschriebenen Ideen und Erkenntnissen beruhend angesehen werden:
Wie einleitend beschrieben, wurde erkannt, dass ein manuelles Verschweißen von Fachwerkkomponenten zu Fachwerken, wie es herkömmlich zur Herstellung von Tragwerken für Personentransportanlagen durchgeführt wurde, verschiedene Probleme und Defizite mit sich bringen kann. Es wird daher angestrebt, die Herstellung von Tragwerken für Personentransportanlagen zumindest teilweise, vorzugsweise sogar vollständig, zu automatisieren. Bei einer teilweisen Automatisierung erfolgt die Fertigung vorwiegend durch Maschinen und wird lediglich durch Personal unterstützt. Bei einer vollständigen Automatisierung erfolgt die Fertigung vollständig autonom durch Maschinen.

Beim Versuch einer Implementierung einer automatisierten Fertigung von Fachwerk-Tragwerken für Personentransportanlagen hat sich ergeben, dass hierfür eingesetzte Geräte und Maschinen gezielt ausgelegt beziehungsweise ausgewählt werden müssen, um die verhältnismäßig großen und schweren Fachwerke aus einer Vielzahl von Fachwerkkomponenten automatisiert zusammensetzen und dabei die Fachwerkkomponenten miteinander lasttragend verbinden zu können. Insbesondere sollten die Geräte und Maschinen geeignet ausgelegt beziehungsweise ausgewählt werden, um eine gesamte Herstellung des Fachwerk-Tragwerkes möglichst effizient innerhalb kurzer Zeitdauer und vorzugsweise bei geringen Kosten durchführen zu können.

Hierzu wurde erkannt, dass die gesamte Vorrichtung zum Herstellen des Fachwerk-Tragwerkes möglichst aus mehreren separaten Fügestationen zusammengesetzt sein sollte. Jede einzelne Fügestation sollte dabei zumindest teilautomatisiert, vorzugsweise vollautomatisiert, arbeiten können und gewisse Fertigungsschritte durchführen können. Die Fügestationen sollten in einer sequenziellen Anordnung miteinander kooperieren, das heißt jede Fügestation kann einen Teil einer gesamten Herstellungssequenz durchführen und dabei Zwischenprodukte fertigen, die dann in einer nachfolgenden Fügestation der sequenziellen Anordnung im Rahmen eines weiteren Teils der Fertigungssequenz weiterverarbeitet werden, bis letztendlich bei einer letzten Fügestation das vollständige Fachwerk-Tragwerk fertiggestellt wird.

Es erscheint hierbei vorteilhaft, die gesamte Vorrichtung mit mindestens zwei, vorzugsweise drei Fügestationen auszustatten. Jede der Fügestationen umfasst dabei zumindest eine Haltevorrichtung und einen Schweißroboter, wobei die Haltevorrichtungen und Schweißroboter der einzelnen Fügestationen unterschiedlich ausgelegt sein können oder sogar sollten und unterschiedliche Aufgaben bewerkstelligen sollen. Die Fügestationen sind vorzugsweise räumlich nahe beieinander angeordnet, um die Transportwege zwischen den Fügestationen möglichst kurz zu halten. Selbstverständlich können die Fügestationen aber auch in getrennten Räumen oder sogar in mehreren Gebäuden untergebracht sein.

Durch ein geeignetes Auslegen jeder einzelnen Fügestation einschließlich ihrer Haltevorrichtungen und Schweißroboter sowie durch ein geeignetes Abstimmen der einzelnen Fügestationen aufeinander derart, dass diese vorteilhaft in einer Sequenz miteinander kooperieren können, kann insgesamt eine vorteilhafte und insbesondere effizient arbeitende gesamte Herstellungsvorrichtung geschaffen werden.

Mögliche Details und Ausgestaltungen der verschiedenen Fügestationen werden weiter unten im Rahmen einer Beschreibung bevorzugter Ausführungsformen der Erfindung weiter erläutert.

Ergänzend wird darauf hingewiesen, dass die Anmelderin der vorliegenden Patentanmeldung taggleich eine weitere Patentanmeldung mit dem Titel "Verfahren zum roboterunterstützten Herstellen eines Tragwerkes für eine Personentransportanlage" eingereicht hat, der weitere mögliche Details und Ausgestaltungen von vorzugsweise durch die verschiedenen Fügestationen durchzuführenden Fügeschritten entnommen werden können.

Es wird darauf hingewiesen, dass einige der möglichen Merkmale und Vorteile der Erfindung hierin mit Bezug auf unterschiedliche Ausführungsformen, teilweise bezogen auf die Vorrichtung und teilweise bezogen auf ein vorzugsweise mit der Vorrichtung ausführbares Verfahren zum Herstellen eines Tragwerkes für eine Personentransportanlage beschrieben sind. Ein Fachmann erkennt, dass die Merkmale in geeigneter Weise kombiniert, übertragen, angepasst und/oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt beispielhaft ein Tragwerk für eine Personentransportanlage, wie es mit einer erfindungsgemäßen Vorrichtung herstellbar ist.
Fig. 2 veranschaulicht eine Fertigungslinie zum Herstellen von Tragwerken für Personentransportanlagen gemäß einer Ausführungsform der vorliegenden Erfindung.
Fig. 3 veranschaulicht eine Draufsicht auf eine Vorfügestation für eine erfindungsgemäße Vorrichtung.
Fig. 4 veranschaulicht eine Seitenansicht auf die in Fig. 3 dargestellte Vorfügestation.
Fig. 5 veranschaulicht eine Draufsicht auf Komponenten einer ersten Fügestation einer erfindungsgemäßen Vorrichtung.
Fig. 6 veranschaulicht eine Draufsicht auf weitere Komponenten der ersten Fügestation der erfindungsgemäßen Vorrichtung.
Fig. 7 veranschaulicht eine Draufsicht auf Komponenten einer zweiten Fügestation einer erfindungsgemäßen Vorrichtung während eines ersten Fügeteilschrittes.
Fig. 8 veranschaulicht eine Seitenansicht auf die in Fig. 7 dargestellten Komponenten.
Fig. 9 veranschaulicht eine Draufsicht auf die Komponenten der zweiten Fügestation aus Fig. 7 während eines zweiten Fügeteilschrittes.
Fig. 10 veranschaulicht eine Seitenansicht der in Fig. 9 dargestellten Komponenten.
Fig. 11 veranschaulicht eine perspektivische Ansicht einer zweiten Fügestation einer erfindungsgemäßen Vorrichtung.
Fig. 12 veranschaulicht eine Draufsicht auf eine dritte Fügestation einer erfindungsgemäßen Vorrichtung.
Fig. 13 veranschaulicht eine Seitenansicht der in Fig. 12 dargestellten dritten Fügestation.
Fig. 14 veranschaulicht eine perspektivische Ansicht der in Fig. 12 dargestellten dritten Fügestation.

Die Figuren sind lediglich schematisch und nicht maßstabsgetreu. Gleiche Bezugszeichen bezeichnen in den verschiedenen Figuren gleiche oder gleichwirkende Merkmale.

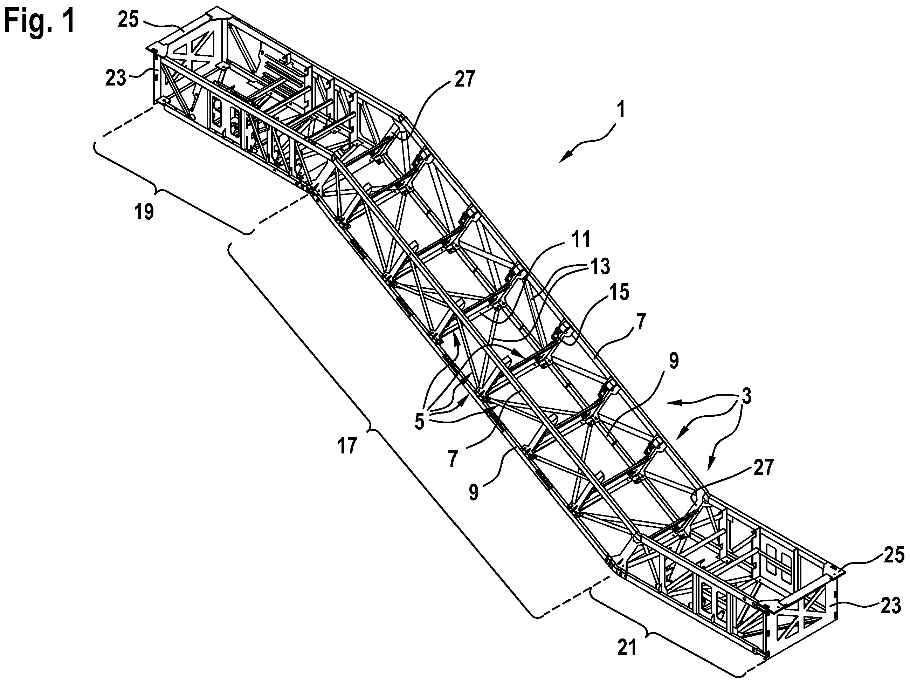

Fig. 1 zeigt beispielgebend ein Tragwerk 1 für eine Personentransportanlage. Im dargestellten Beispiel ist das Tragwerk 1 als Fachwerk 3 ausgebildet, das eine lasttragende Struktur für eine Fahrtreppe bilden kann, mithilfe derer Personen zwischen beispielsweise zwei Stockwerken eines Bauwerkes befördert werden können.

Das Fachwerk 3 des Tragwerkes 1 setzt sich aus einer Vielzahl miteinander verbundener Fachwerkkomponenten 5 zusammen. Dabei bilden einige der Fachwerkkomponenten 5 zueinander parallel verlaufende und sich parallel zu der Erstreckungsrichtung des länglichen Tragwerkes 1 erstreckende Obergurte 7 und Untergurte 9. Andere Fachwerkkomponenten 5 bilden quer zu den Ober- und Untergurten 7, 9 verlaufende und diese verbindende Querstreben 11, Diagonalstreben 13 und Steher 15.

An einen Mittelteil 17 des Tragwerkes 1, der in einem in ein Bauwerk eingebauten Zustand geneigt verläuft, schließt sich an dessen oberem Ende ein horizontal verlaufender ebenfalls fachwerkartig ausgebildeter Oberteil 19 an, der eine obere Landestelle der Fahrtreppe tragen kann und in dem beispielsweise ein Schienenblock und/oder ein Antriebsraum untergebracht sein kann. An ein unteres Ende des Mittelteils 17 schließt sich ein weiterer fachwerkartig ausgebildeter Unterteil 21 an, in dem beispielsweise ein weiterer Schienenblock und/oder eine Spannstation aufgenommen sein können.

An dem Oberteil 19 und dem Unterteil 21 kann das Tragwerk 1 beispielsweise im Bereich eines Fachwerkabschlusses 23 über Auflagewinkel 25 mit tragenden Strukturen eines Bauwerkes verbunden und dort aufgelagert werden. An oberen und unteren Übergängen zwischen dem Mittelteil 17 und dem Oberteil 19 beziehungsweise dem Unterteil 21 sind in dem Fachwerk 3 sogenannte Winkelsteher 27 vorgesehen, welche die Obergurte 7 und die Untergurte 9 an einem dortigen Knick des Fachwerkes 3 miteinander verbinden.

Zur Herstellung eines als Tragwerk 1 dienenden Fachwerkes 3 wird herkömmlich die Vielzahl von Fachwerkkomponenten 5 meist durch Personen, die als Schweißer qualifiziert und zertifiziert sind, unter Verwendung von händisch zu führenden Schweißgeräten manuell miteinander verschweißt. Die Fachwerkkomponenten 5 werden dabei zwischenzeitlich meist mithilfe von Lehren in einer gewünschten Positionierung relativ zueinander gehalten und dann miteinander verschweißt. Wie bereits weiter oben ausgeführt, kann eine solche weitgehend manuell durchgeführte Herstellung verschiedene sowohl technische als auch wirtschaftliche Nachteile mit sich bringen wie einen hohen Arbeits- und Zeitaufwand, hohe Kosten für die zur Qualitätssicherung notwendigerweise einzusetzenden zertifizierten Schweißer, ein meist nachträglich notwendiges Richten des Fachwerkes aufgrund eines unregelmäßigen Wärmeeintrags beim Schweißvorgang und dadurch bedingtes Verziehen des verschweißten Fachwerkes, ein hoher logistischer Aufwand, etc.

Es werden daher hierin eine Vorrichtung beziehungsweise ein vorzugsweise mithilfe dieser Vorrichtung durchführbares Verfahren zum Herstellen eines Tragwerkes für eine Personentransportanlage beschrieben, bei denen für die Herstellung des letztendlich zu fertigenden Tragwerkes wesentliche Fertigungsschritte mithilfe von geeignet ausgebildeten Haltevorrichtungen und Schweißrobotern in aufeinander abgestimmten mehreren Fügestationen teilautomatisiert oder vorzugsweise vollautomatisiert durchgeführt werden können.

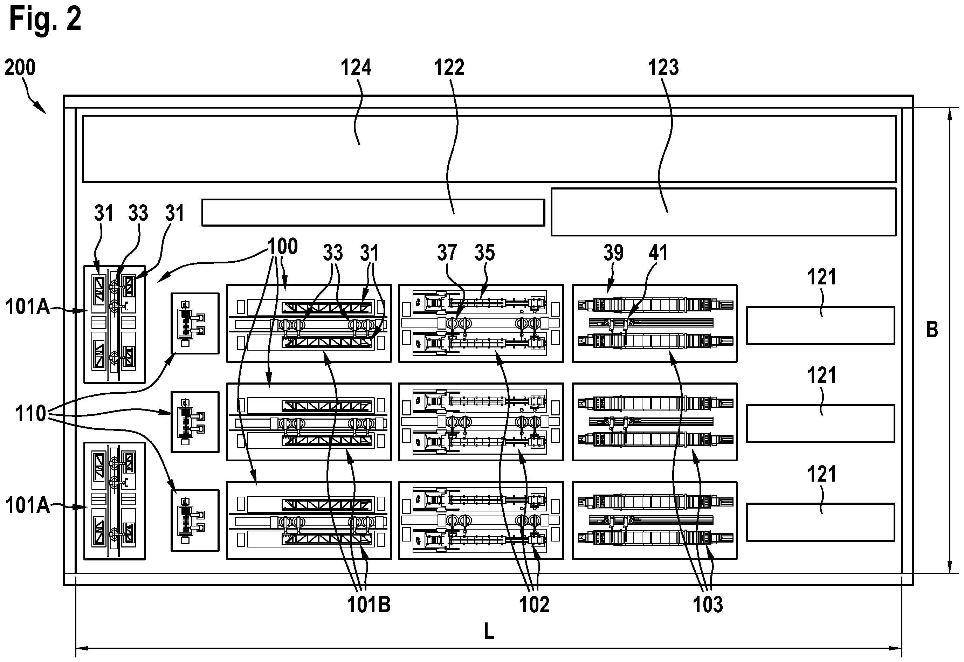

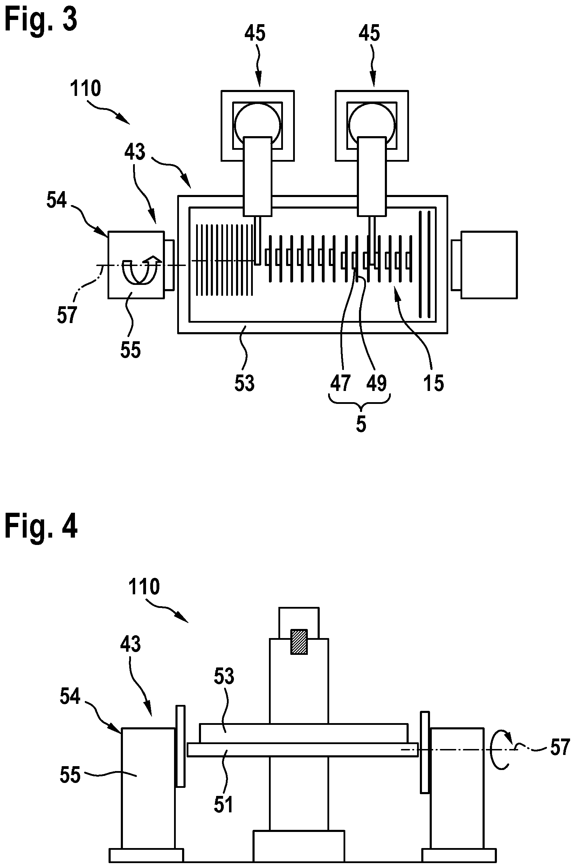

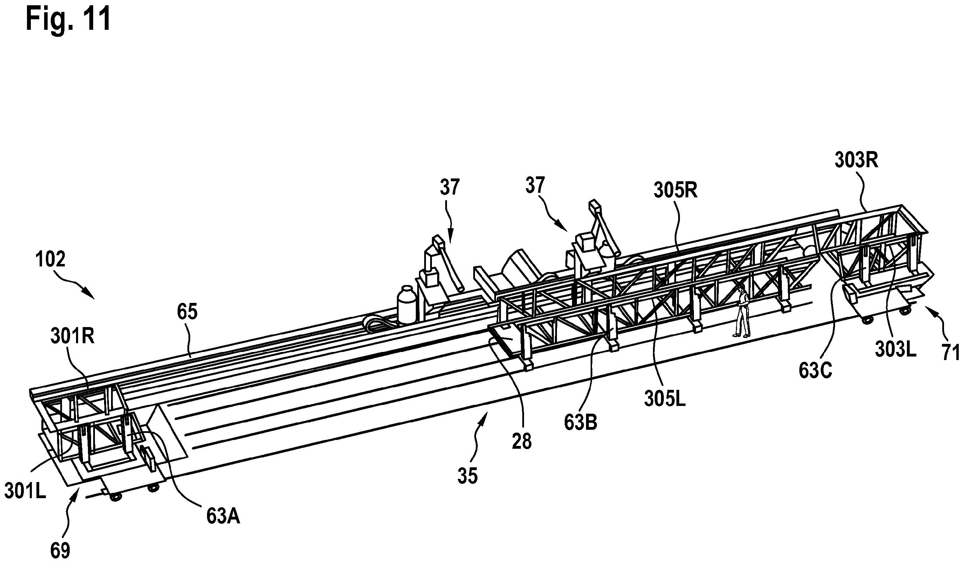

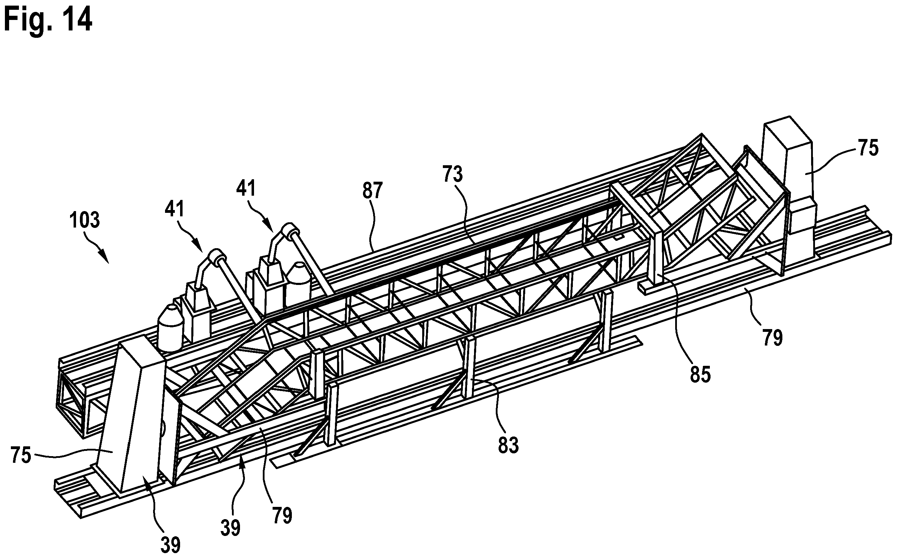

Nachfolgend wird zunächst unter Bezugnahme auf Fig. 2 eine erfindungsgemäße Fertigungslinie und ein Überblick über die darin eingesetzten Vorrichtungen zum Herstellen von Tragwerken für Personentransportanlagen beschrieben. Anschließend werden unter Bezugnahme auf die Fig. 3 bis 14 Details von in verschiedenen Fügestationen der Herstellungsvorrichtungen eingesetzten Gerätschaften und Maschinen sowie der jeweils durchzuführenden Verfahrens- und Fügeschritte beschrieben.

Fig. 2 skizziert schematisch eine erfindungsgemäße Fertigungslinie, mithilfe derer im industriellen Maßstab teil- oder vollautomatisiert eine große Anzahl von Tragwerken für Personentransportanlagen gefertigt werden kann. Die Fertigungslinie 200 umfasst mehrere erfindungsgemäße Vorrichtungen 100 zum Herstellen von Tragwerken 1 für Personentransportanlagen (nachfolgend als "Herstellvorrichtung 100" bezeichnet). Jede der Herstellvorrichtungen 100 umfasst eine erste Fügestation 101, eine zweite Fügestation 102 und eine dritte Fügestation 103. Diese drei Fügestationen 101, 102, 103 sind räumlich sequenziell hintereinander angeordnet. Dadurch können von den einzelnen Fügestationen 101, 102, 103 durchzuführende Fügeschritte in einer zeitlichen Sequenz nacheinander ausgeführt werden und dabei gefertigte Zwischenprodukte jeweils von einer der Fügestationen 101, 102, 103 zu einer nachfolgenden weitergereicht werden.

Jede der Herstellvorrichtungen 100 umfasst ferner eine der ersten Fügestation 101 vorgeschaltete Vorfügestation 110.

Ferner können der dritten Fügestation 103 nachgeschaltete weitere Stationen und/oder ergänzende Stationen, die vor, während oder nach den durch die drei Fügestationen 101, 102, 103 durchzuführenden Fügeschritten nach Bedarf eingesetzt werden können, vorgesehen sein. Beispielsweise kann sich an die dritte Fügestation 103 jeweils eine Lackierstation 121 anschließen. Ferner kann eine Sandstrahlstation 122, eine Station 123 zum Schneiden, Sägen und Schweißvorbereiten sowie ein Lagerbereich 124, in dem beispielsweise Rohkomponenten und daran anzubringende Anbaukomponenten oder auch fertiggestellte Tragwerke gelagert werden können, vorgesehen sein.

In jeder der Herstellvorrichtungen 100 sind die darin vorgesehenen Fügestationen 101, 102, 103 dazu ausgelegt, teilautomatisiert oder vollautomatisiert zu arbeiten und dabei in günstiger Weise miteinander zu kooperieren. Die einzelnen Fügestationen 101, 102, 103 sind dabei geeignet mit Gerätschaften wie insbesondere Haltevorrichtungen und Schweißrobotern und gegebenenfalls auch Handlingrobotern ausgestattet, dass von ihnen durchzuführende Fügeschritte derart aufeinander abgestimmt sind, dass an jeder der Fügestationen 101, 102, 103 ein Teil der insgesamt durchzuführenden Herstellungssequenz durchgeführt werden kann und die dabei erzeugten Zwischenprodukte jeweils so weit bearbeitet sind, dass sie zu einer in der Sequenz nachfolgenden Fügestation transportiert und dort weiterverarbeitet werden können.

Die einzelnen Fügestationen 101, 102, 103 und die dort auszuführenden Fügeschritte sind dabei vorzugsweise derart aufeinander abgestimmt, dass Zeitdauern oder Taktraten, innerhalb derer die einzelnen Fügeschritte durchgeführt werden, in den verschiedenen Fügestationen 101, 102, 103 möglichst in etwa gleich lang sind. Dadurch können die Zwischenprodukte in den einzelnen Fügestationen 101, 102, 103 mit einer vorgebbaren Taktzeit bearbeitet werden und dann anschließend jeweils an eine nachfolgende Fügestation oder eine andere Station innerhalb der Fertigungslinie 200 weitergereicht werden.

Die Herstellvorrichtung 100 weist in ihrer ersten Fügestation 101 wenigstens eine Haltevorrichtung 31 sowie wenigstens einen Schweißroboter 33 auf. Die Haltevorrichtung dient dazu, Fachwerkkomponenten während eines ersten Fügeschrittes zu halten.

Die Begriffe "Haltevorrichtung" und "halten" sollen dabei breit ausgelegt werden. "Halten" kann zum Beispiel bedeuten, dass Fachwerkkomponenten abgestützt oder eingespannt werden und vorzugsweise in einer absoluten Position oder in einer relativen Position, zum Beispiel einer relativen Position bezüglich anderer Fachwerkkomponenten, fixiert werden und/oder gegebenenfalls zuvor auch erst in diese Position gebracht werden. Eine Haltevorrichtung kann beispielsweise eine einfache stationäre Haltestruktur wie zum Beispiel ein Tisch sein, der eine Fachwerkkomponente lediglich passiv hält, das heißt zum Beispiel gegen die Schwerkraft abstützt. Alternativ kann die Haltevorrichtung auch dazu ausgelegt sein, Fachwerkkomponenten sowohl zu halten als auch sie aktiv bewegen zu können. Beispielsweise kann eine Haltevorrichtung in Form eines Handlingroboters oder einer selbstverlagerbaren Maschine ausgestaltet sein. Gegebenenfalls kann die Haltevorrichtung auch aus mehreren Teilvorrichtungen bestehen.

Der wenigstens eine Schweißroboter der ersten Fügestation dient dazu und ist speziell dazu eingerichtet, während des ersten Fügeschrittes Fachwerkkomponenten jeweils zu Seitenteilen des Unterteils 21, Seitenteilen des Oberteils 19 und Seitenteilen des Mittelteils 17 des Fachwerkes 3 zusammenzuschweißen.

Im vorliegenden Ausführungsbeispiel werden in den Fügestationen 101, 102, 103 jeweils zwei Seitenteile des Unterteils 21, zwei Seitenteile des Oberteils 19 und zwei Seitenteile des Mittelteils 17 gefertigt. Für Fachwerke 3 von Doppelfahrtreppen wären noch weitere, den Seitenteile ähnliche Zentralteile erforderlich, die dann in der zweiten Fügestation auf der Mittellängsebene des vorpositionierten Fachwerkes verbaut würden. Die Fügestationen 101, 102, 103 könnten entsprechend ausgelegt sein, auch diese Zentralteile zu erzeugen und zu verbauen. Selbstverständlich können die Seitenteile, insbesondere die Seitenteile des Mittelteils 17 auch in mehrere, durch Schraubverbindungen verbindbare Abschnitte unterteilt sein. Dadurch kann eine Personentransportanlage in Modulbauweise geschaffen werden, welche Module besser in ein bestehendes Gebäude einbringbar sind als die Personentransportanlage in einem Stück.

Die zweite Fügestation 102 der Herstellvorrichtung 100 weist ebenfalls wenigstens eine Haltevorrichtung 35 und wenigstens einen Schweißroboter 37 auf. Die wenigstens eine Haltevorrichtung 35 sowie der wenigstens eine Schweißroboter 37 der zweiten Fügestation 102 sind jedoch anders ausgelegt als die gleichnamigen Gerätschaften der ersten Fügestation 101.

Insbesondere ist die Haltevorrichtung 35 der zweiten Fügestation 102 speziell dazu ausgelegt, innerhalb eines zweiten Fügeschrittes die zuvor in der ersten Fügestation 102 gefertigten Seitenteile des Unterteils 21, des Mittelteils 17 und des Oberteils 19 zu halten und ergänzend auch weitere Fachwerkkomponenten angrenzend angeordnet jeweils zwischen diesen Seitenteilen zu halten. Die Seitenteile bestehen dabei typischerweise aus Obergurten 7, Untergurten 9, Diagonalstreben 13 und Stehern 15 und bilden im Wesentlichen zwei-dimensionale Konstrukte. Die Haltevorrichtung 35 der zweiten Fügestation 102 hält diese Seitenteile vorzugsweise stehend, das heißt vertikal ausgerichtet. Zwischen zwei benachbart gehaltenen Seitenteilen hält die Haltevorrichtung ferner weitere Fachwerkkomponenten wie beispielsweise Diagonalstreben und Querstreben, welche vorzugsweise liegend und derart angeordnet gehalten werden, dass sie an Fachwerkkomponenten der Seitenteile angrenzen und diese quasi miteinander verbinden.

Der mindestens eine Schweißroboter 37 der zweiten Fügestation 102 ist dann dazu ausgelegt, die weiteren Fachwerkkomponenten mit den jeweils angrenzend angeordneten Seitenteilen des Unterteils 21, des Mittelteils 17 und des Oberteils 19 jeweils zu einem vorpositionierten Unterteil 21, einem vorpositionierten Mittelteil 17 und einem vorpositionierten Oberteil 19 positionierend zusammenzuschweißen.

Unter einem "positionierenden Zusammenschweißen" soll dabei verstanden werden, dass die jeweiligen Fachwerkkomponenten in einer gewissen Position relativ zueinander aneinander vorläufig durch Schweißungen fixiert werden, ohne dass die hierfür vorgesehenen Schweißungen notwendigerweise lasttragend ausgelegt sein brauchen. Beispielsweise kann ein solches positionierendes Zusammenschweißen ein Punktschweißen oder Heftschweißen sein.

Ergänzend ist der wenigstens eine Schweißroboter 37 der zweiten Fügestation 102 dazu ausgelegt, das zuvor positionierend zusammengeschweißte vorpositionierte Unterteil 21 und das vorpositionierte Oberteil 19 jeweils an entgegengesetzte Enden des vorpositionierten Mittelteils 17 positionierend anzuschweißen und durch ein solches positionierendes Zusammenschweißen letztendlich eine gesamte vorpositionierte Fachwerkstruktur 73 zu bilden. In diesem Stadium ist die vorpositionierte Fachwerkstruktur 73 zwar vorzugsweise selbsttragfähig, allerdings noch nicht fertig lasttragfähig verschweißt.

Die dritte Fügestation 103 der Herstellvorrichtung 100 verfügt ebenfalls über eine Haltevorrichtung 39 sowie wenigstens einen Schweißroboter 41. Auch in diesem Fall sind die Haltevorrichtung 39 und der Schweißroboter 41 für spezielle Aufgaben und Zwecke ausgelegt und können sich hinsichtlich ihrer Ausgestaltung und Arbeitsweise von den gleichnamigen Gerätschaften der ersten und zweiten Fügestation 101, 102 unterscheiden.

Insbesondere ist die Haltevorrichtung 39 der dritten Fügestation 103 dazu eingerichtet, die während des zweiten Fügeschrittes gefertigte gesamte vorpositionierte Fachwerkstruktur 73 während eines dritten Fügeschrittes zu halten. Der wenigstens eine Schweißroboter 41 ist dazu ausgelegt, während des dritten Fügeschrittes die Fachwerkkomponenten der zuvor nur positionierend zusammengeschweißten gesamten vorpositionierten Fachwerkstruktur 73 durch ein lasttragendes Zusammenschweißen der Fachwerkkomponenten zu einem letztendlich lasttragfähigen Fachwerk zu verbinden.

Unter einem "lasttragenden Zusammenschweißen" kann dabei verstanden werden, dass die miteinander zu verbindenden Fachwerkkomponenten mittels vorzugsweise durchgehender, lasttragender Schweißnähte miteinander verschweißt werden. Die lasttragenden Schweißnähte sind demzufolge in der Lage, die an den Fachwerkkomponenten wirkenden Kräfte gemäss ihrer rechnerischen Auslegung zu übertragen.

Nachfolgend werden die verschiedenen Fügeschritte, wie sie im Rahmen eines Verfahrens zum Herstellen eines Tragwerkes einer Personentransportanlage hierin vorgeschlagen werden, sowie mögliche Einzelheiten von hierfür einzusetzenden Fügestationen 101, 102, 103 einer Herstellungsvorrichtung 100 mit Bezug auf die Fig. 3 bis 14 beschrieben.

Es wird dabei allgemein darauf hingewiesen, dass die in den Figuren dargestellten und in der nachfolgenden Beschreibung erläuterten Ausführungsformen lediglich exemplarisch sein sollen und sowohl das Herstellungsverfahren als auch die hierzu einzusetzende Herstellungsvorrichtung 100 im Rahmen der durch die Patentansprüche vorgegebenen Definitionen auch in anderer Weise ausgestaltet sein können. Insbesondere kann sich eine Anzahl und/oder konkrete Ausgestaltung von Haltevorrichtungen und/oder Schweißrobotern und/oder anderer Gerätschaften in den verschiedenen Fügestationen 101, 102, 103 sowie in der Vorfügestation 110 von den hierin beschriebenen und dargestellten Ausführungsformen unterscheiden.

### a) Vorfügeschritt an der Vorfügestation 110

In den Fig. 3 und 4 sind eine Draufsicht und eine Seitenansicht von vorne auf eine Vorfügestation 110 dargestellt. Die Vorfügestation 110 verfügt über wenigstens eine Haltevorrichtung 43 sowie wenigstens einen Schweißroboter 45. Die Haltevorrichtung 43 dient im Rahmen eines Vorfügeschrittes dazu, Rohkomponenten 47 und daran anzubringende Anbaukomponenten 49 zu halten. Der wenigstens eine Schweißroboter 45 dient dann dazu, die Rohkomponenten 47 und die daran anzubringenden Anbaukomponenten 49 zu Fachwerkkomponenten 5 zusammenzuschweißen.

Während des Vorfügeschrittes können die Rohkomponenten 47 und die daran anzubringenden Anbaukomponenten 49 mithilfe der hierzu geeignet ausgestalteten Haltevorrichtung 43 der Vorfügestation 110 gemeinsam um eine Rotationsachse 57 gedreht werden. Dadurch können die Rohkomponenten 47 und die Anbaukomponenten 49 in eine geeignete Orientierung gebracht werden, damit der Schweißroboter 45 diese geeignet miteinander verschweißen kann.

Im dargestellten Beispiel kann die Vorfügestation 110 dazu ausgelegt sein, beispielsweise als Rohkomponenten 47 dienende Metallprofile und als daran anzubringende Anbaukomponenten 49 dienende Knotenbleche zu Stehern 15 schweißend zusammenzufügen. Die Steher 15 können dann in nachfolgenden Fügeschritten als Fachwerkkomponenten 5 bereitgestellt und weiterverarbeitet werden.

In der dargestellten Ausführungsform ist die Haltevorrichtung 43 der Vorfügestation 110 als Wendeeinrichtung 54 mit einem Aufspannrahmen 51 für wechselbare Vorrichtungskassetten 53 ausgebildet. Die Wendeeinrichtung 54 verfügt über einen motorisch angetriebenen Wender 55, mithilfe dessen der Aufspannrahmen 51 um die horizontale Rotationsachse 57 gedreht werden kann. An dem Aufspannrahmen 51 kann die Vorrichtungskassette 53 beispielsweise mithilfe eines Schnellspannsystems befestigt werden. Mithilfe des Wenders 55 kann somit die Vorrichtungskassette 53 vorzugsweise um bis zu 360° um die Rotationsachse 57 verschwenkt werden.

In der Vorrichtungskassette 53 können die zu verschweißenden Teile, das heißt insbesondere die Rohkomponenten 47 und/oder die Anbaukomponenten 49, eingelegt und/oder gehalten sein. Dabei können diese Teile durch die Vorrichtungskassette 53 geeignet relativ zueinander positioniert sein. Die Rohkomponenten 47 und die daran anzubringenden Anbaukomponenten 49 können dann mithilfe des Schweißroboters 45 miteinander verschweißt werden. Je nach späterem Verwendungszweck können dabei lediglich vorläufig positionierende Schweißungen, beispielsweise Heftschweißungen, oder lasttragfähige Schweißungen, beispielsweise durchgehende Schweißnähte, erzeugt werden.

Innerhalb einer Fertigungslinie 200 können gegebenenfalls verschiedene Vorfügestationen 110 vorgesehen sein, mithilfe derer verschiedene Typen von Fachwerkkomponenten 5 aus zugehörigen Rohkomponenten 47 und Anbaukomponenten 49 zusammengesetzt und verschweißt werden können. Beispielsweise können Vorbaugruppen in Form von Stehern, Diagonalstreben, Querstreben etc. mit jeweils daran geeignet angebrachten Anbaukomponenten 49 vorgefertigt und in nachfolgenden Fügeschritten dann als Fachwerkkomponenten 5 bereitgestellt werden. Einzusetzende Vorrichtungskassetten 53 können sich dabei je nach zu verarbeitenden Rohkomponenten 47 und Anbaukomponenten 49 voneinander unterscheiden. Der oder die zum Verschweißen einzusetzenden Schweißroboter 45 können jeweils angepasst an eine konkret zu fertigende Vorbaugruppe adaptiert und/oder programmiert sein. Je nach Steuerungskonzept können die Bearbeitungsprogramme der Schweißroboter 45 zentral verwaltet oder lokal verwaltet werden. Eine lokale Verwaltung setzt voraus, dass der Schweißroboter 45 die temporär auf dem Aufspannrahmen 51angeordnete Vorrichtungskassette 53 identifizieren und das zugeordnete Bearbeitungsprogramm abrufen und abarbeiten kann. Beispielsweise können die Schweißroboter 45 dazu ausgelegt sein, einen Schweißkopf automatisiert zu bewegen und zu betätigen. Der Schweißroboter 45 kann den Schweißkopf beispielsweise linear (d.h. ein-dimensional), innerhalb einer Ebene (d.h. zwei-dimensional) oder vorzugsweise sogar beliebig im Raum (d.h. drei-dimensional) bewegen.

### b) Erster Fügeschritt an der ersten Fügestation 101

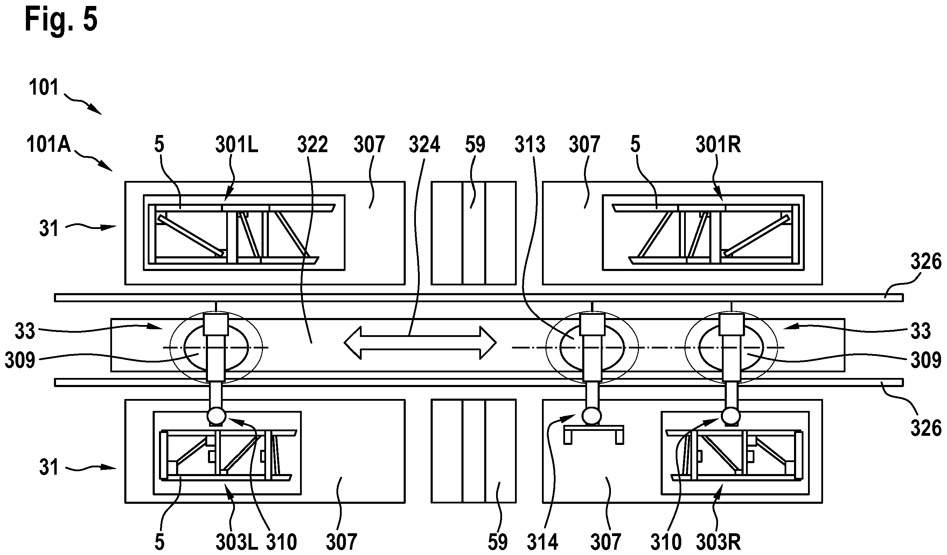

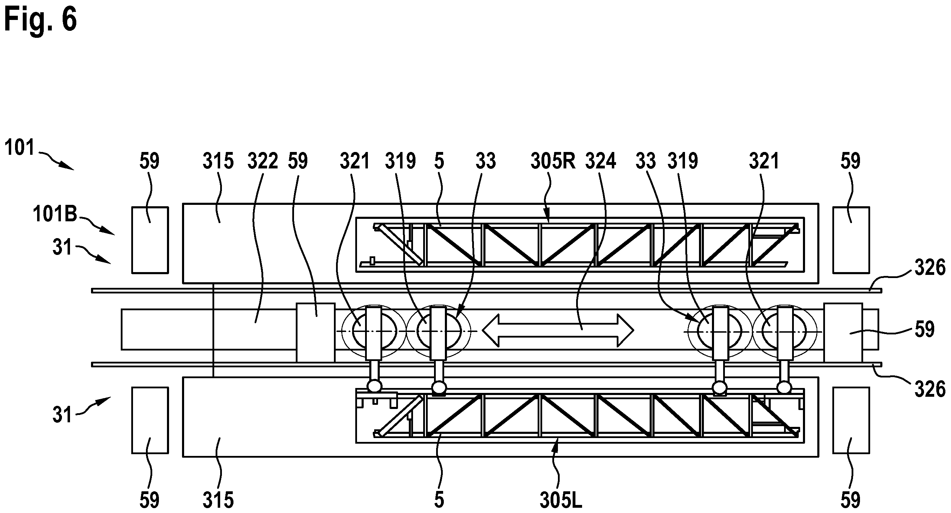

In den Fig. 5 und 6 sind Draufsichten auf Teilbereiche 101a, 101b einer ersten Fügestation 101 für eine erfindungsgemäße Herstellungsvorrichtung 100 beispielhaft dargestellt. Der Teilbereich 101a der ersten Fügestation 101 ist dabei dazu ausgelegt, gegebenenfalls geeignet vorgefertigte Fachwerkkomponenten 5 zu linken und rechten Seitenteilen 301L, 301R des Oberteils 19 des Fachwerkes 3 sowie zu linken und rechten Seitenteilen 303L, 303R des Unterteils 21 des Fachwerkes 3 zusammenzufügen. Der andere Teilbereich 101b der ersten Fügestation 101 ist dazu vorgesehen, linke und rechte Seitenteile 305L, 305R des Mittelteils 17 des Fachwerkes 3 aus bereitgestellten Fachwerkkomponenten 5 zusammenzufügen.

Bei der beispielhaft dargestellten ersten Fügestation 101 sind in den verschiedenen Teilbereichen 101a, 101b die dort vorgesehenen Haltevorrichtungen 31 und Schweißroboter 33 unterschiedlich ausgestaltet und angeordnet.

Für den zur Fertigung der Seitenteile 301L, 301R, 303L, 303R des Ober- und Unterteils 19, 21 vorgesehenen Teilbereich 101a der ersten Fügestation 101 sind zwei Haltevorrichtungen 31 in Form von jeweils zwei starren Tischen 307 vorgesehen. Zwei starre Tische 307 können die zur Bildung der Seitenteile 301L, 301R des Oberteils 19 vorgesehenen Fachwerkkomponenten 5 halten. Die Fachwerkkomponenten 5 können hierbei geeignet positioniert relativ zueinander auf einen der Tische 307 gelegt werden. Zwei weitere Tische 307 können die zur Bildung der Seitenteile 303L, 303R des Unterteils 21 zusammenzufügenden Fachwerkkomponenten 5 halten. Zwischen zwei in Längsrichtung benachbarten Tischen 307 kann jeweils ein Teilemagazin 59 vorgesehen sein, in dem die zur Bildung des Oberteils 19 beziehungsweise des Unterteils 21 vorzusehenden Fachwerkkomponenten 5 aufgenommen sein können. Die Tische 307 dienen dabei als erste Haltevorrichtungen.

Zu jeder dieser ersten Haltevorrichtungen 307 ist ein Schweißroboter 309 zugeordnet. Die Schweißroboter 309 sind dazu ausgelegt, die Fachwerkkomponenten 5 des Oberteils 19 beziehungsweise des Unterteils 21 jeweils zu den zwei Seitenteilen 301L, 301R beziehungsweise 303L, 303R des Oberteils 19 beziehungsweise Unterteils 21 zusammenzuschweißen. Hierzu können die Schweißroboter 309 ihre Schweißköpfe 310 möglichst zumindest in zwei Dimensionen, vorzugsweise in drei Dimensionen bewegen.

Ferner ist zu jeder ersten Haltevorrichtung 307 ein Handlingroboter 313 zugeordnet. Dabei kann gegebenenfalls ein einzelner Handlingroboter 313 beide erste Haltevorrichtungen 307 bedienen. Es können jedoch auch mehrere Handlingroboter 313 vorgesehen sein. Ein Handlingroboter 313 kann dazu ausgelegt sein, jeweilige Fachwerkkomponenten 5 des Oberteils 19 beziehungsweise des Unterteils 21 aktiv bewegend zu handhaben. Hierzu kann der Handlingroboter 313 beispielsweise einen Greifarm 314 oder ähnliches aufweisen. Beispielsweise kann der Handlingroboter 313 Fachwerkkomponenten 5 aus dem Teilemagazin 59 entnehmen und auf eine der ersten Haltevorrichtungen 307 legen und dort gegebenenfalls geeignet positionieren.

In dem zweiten Bereich 101b der ersten Fügestation 101 kann eine zweite Haltevorrichtung 315 beispielsweise in Form zweier starrer Tische vorgesehen sein. Auf dieser zweiten Haltevorrichtung 315 können Fachwerkkomponenten 5 für die Seitenteile 305R, 305L des Mittelteils 17 gehalten beziehungsweise gelagert werden. Ferner sind zwei der zweiten Haltevorrichtung 315 zugeordnete Schweißroboter 319 dazu ausgebildet, die Fachwerkkomponenten 5 des Mittelteils 17 zu den zwei Seitenteilen 305R, 305L zusammenzuschweißen. Ergänzend sind zwei der zweiten Haltevorrichtung 315 zugeordnete Handlingroboter 321 vorgesehen und dazu ausgelegt, jeweilige Fachwerkkomponenten 5 des Mittelteils 17 aktiv bewegend zu handhaben.

Die Schweißroboter 309, 319 und/oder die Handlingroboter 313, 321 können dazu ausgelegt sein, ihre Position in einer Richtung parallel zu einer Längserstreckungsrichtung des auf einer zugehörigen Haltevorrichtung 305, 307, 315 gelagerten Unterteils 21, Oberteils 19 beziehungsweise Mittelteils 17 translatorisch zu verlagern. Die Verlagerungsrichtung 324 ist in den Figuren 5, 6 durch Pfeile angedeutet. Beispielsweise können die Roboter 309, 313, 319, 321 entlang einer Verfahrbahn 322 oder entlang von Schienen verfahren werden. Als Schutzmaßnahmen können verlagerbare Trennwände 326 vorgesehen sein, die sich z.B. parallel zu der Verlagerungsrichtung 324 erstrecken können. Gegebenenfalls können Teilemagazine 59 mit einem der verfahrbaren Roboter309, 313, 319, 321 gekoppelt sein und sich mit diesem zusammen verlagern lassen.

Während eines ersten Fügeschrittes kann die erste Fügestation 101 dazu eingesetzt werden, jeweilige Fachwerkkomponenten 5 des Unterteils 21 beziehungsweise des Oberteils 19 an einer jeweiligen der zwei ersten Haltevorrichtungen 307 mittels eines dieser ersten Haltevorrichtung 307 zugeordneten Handlingroboters 313 handzuhaben und in Position zu bringen. Die jeweiligen Fachwerkkomponenten 5 des Unterteils 21 beziehungsweise des Oberteils 19 können dann jeweils an einer der ersten Haltevorrichtungen 307 gehalten werden und dort mittels eines jeweils zugeordneten Schweißroboters 309 zu Seitenteilen 301L, 301R des Oberteils 19 beziehungsweise Seitenteilen 303L, 303R des Unterteils 21 zusammengeschweißt werden. In ähnlicher Weise können in dem anderen Teilbereich 101b der ersten Fügestation 101 während des ersten Fügeschrittes jeweilige Fachwerkkomponenten 5 des Mittelteils 17 mittels eines der zweiten Haltevorrichtung 315 zugeordneten Handlingroboters 321 aktiv gehandhabt und in Position gebracht werden, bevor sie dann dort mithilfe des jeweils zugeordneten Schweißroboters 319 zu zwei Seitenteilen 305R, 305L des Mittelteils 17 zusammengeschweißt werden.

Mit anderen Worten ausgedrückt und konkret bezogen auf die in den Fig. 5 und 6 dargestellte beispielhafte Ausgestaltung sind in der ersten Fügestation 101 drei Arbeitsplätze vorgesehen, um jeweils linke und rechte Seitenteile 301, 303, 305 für das Oberteil 19, das Unterteil 21 beziehungsweise das Mittelteil 17 des Fachwerkes 3 fertigen zu können. Jeder dieser drei Arbeitsplätze weist zwei starre Vorrichtungstische auf, jeweils einen für ein linkes Seitenteil und einen für ein rechtes Seitenteil. Zwischen diesen als Haltevorrichtungen 307 dienenden Vorrichtungstischen sind für die Seitenteile 301, 303 des Oberteils 19 und des Unterteils 21 jeweils ein Handlingroboter 313 und ein Schweißroboter 309 angeordnet. Für die Seitenteile 305 des Mittelteils 17 sind vorzugsweise zwei Handlingroboter 321 und zwei Schweißroboter 319 vorgesehen. Während des ersten Fügeschrittes legt einer der Handlingroboter 313, 321 die für eines der Seitenteile 301, 303, 305 notwendigen Fachwerkkomponenten 5 in Form von Vorbaugruppen und Bauteilen in einer richtigen Position auf einen der Vorrichtungstische. Ein zugehöriger Schweißroboter 309, 319 schweißt dann alle Teile des jeweiligen Seitenteils 301, 303, 305 zusammen. Die Vorbaugruppen, Bauteile beziehungsweise Fachwerkkomponenten 5 entnimmt der Handlingroboter 313, 321 beispielsweise einem oder mehreren Teilemagazinen 59. Gegebenenfalls kann der Handlingroboter 313, 321 so ausgelegt sein, dass er auch die fertig geschweißten Seitenteile 301, 303, 305 von einem Vorrichtungstisch heben und entfernen kann.

### c) Zweiter Fügeschritt an der zweiten Fügestation 102

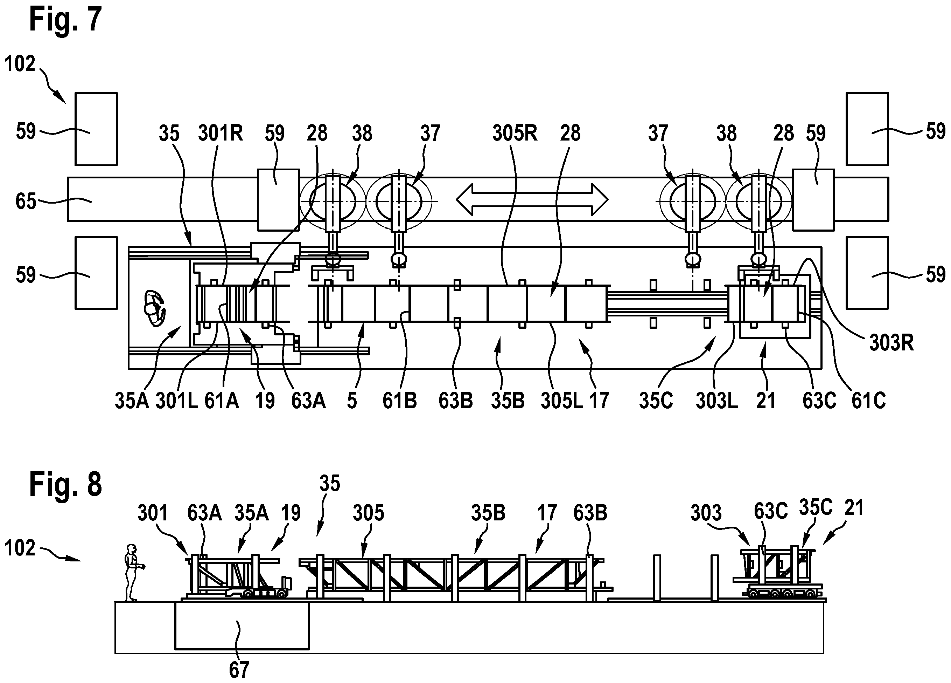

Nachdem im ersten Fügeschritt Fachwerkkomponenten 5 jeweils zu linken und rechten Seitenteilen 301, 303, 305 des Oberteils 19, des Unterteils 21 und des Mittelteils 17 zusammengeschweißt wurden, werden diese Seitenteile 301, 303, 305 anschließend von der ersten Fügestation 101 zur zweiten Fügestation 102 gebracht. Hierzu können beispielsweise in einer Fertigungslinie 200 hierfür vorgesehene Lastkräne, spezielle Fahrzeuge oder Ähnliches eingesetzt werden. Dabei werden die Seitenteile 301, 303, 305 wie in Figur 7 und Figur 8 dargestellt, durch Hellings 63A, 63B, 63C gehalten.

In der zweiten Fügestation 102 werden als erster Teilfügeschritt eines dort durchzuführenden zweiten Fügeschrittes zunächst die jeweiligen Seitenteile 301, 303, 305 durch Einschweißen von jeweils ein linkes und ein rechtes Seitenteil verbindenden weiteren Fachwerkkomponenten 5 wie beispielsweise Querstreben 61B zu einem vorpositionierten Oberteil 19, einem vorpositionierten Unterteil 21 beziehungsweise einem vorpositionierten Mittelteil 17 verschweißt. Allerdings sind in diesem Zustand die Fachwerkkomponenten 5 noch nicht lasttragend, sondern lediglich positionierend miteinander verschweißt, beispielsweise durch Punkt- oder Heftschweißungen.

Anschließend wird ebenfalls in der zweiten Fügestation 102 als zweiter Teilfügeschritt die gesamte vorpositionierte Fachwerkstruktur 73 zusammengeschweißt. Hierzu werden das vorpositioniert zusammengeschweißte vorpositionierte Oberteil 19 und das vorpositioniert zusammengeschweißte vorpositionierte Unterteil 21 jeweils an das ebenfalls vorpositioniert zusammengeschweißte Mittelteil 17 herangefahren, relativ zu diesem in einen gewünschten Winkel verschwenkt und dann an dieses positionierend angeschweißt, das heißt weitgehend lediglich mit Punkt- oder Heftschweißungen an dem Mittelteil 17 fixiert.

In den Fig. 7 bis 11 ist die zweite Fügestation 102 jeweils in Draufsicht und in Seitenansicht während beider Teilfügeschritte des zweiten Fügeschrittes sowie in einer perspektivischen Ansicht dargestellt.

Die Haltevorrichtung 35 der zweiten Fügestation 102 weist eine erste, eine zweite und eine dritte Teilhaltevorrichtung 35A, 35B, 35C auf. Die erste Teilhaltevorrichtung 35A ist zum Halten des linken und des rechten Seitenteils 301L, 301R des Oberteils 19 und zum Halten weiterer Fachwerkkomponenten 61A angrenzend angeordnet zwischen den beiden sich gegenüberliegend angeordneten Seitenteilen 301R, 301L des Oberteils 19 ausgebildet. In ähnlicher Weise ist die zweite Teilhaltevorrichtung 35B zum Halten der zwei Seitenteile 305L, 305R des Mittelteils 17 und zum Halten von weiteren Fachwerkkomponenten 61B angrenzend angeordnet jeweils zwischen den Seitenteilen 305L, 305R des Mittelteils 17 ausgebildet. Die dritte Teilhaltevorrichtung 35C ist dementsprechend zum Halten der zwei Seitenteile 303L, 303R des Unterteils 21 und zum Halten weiterer Fachwerkkomponenten 61C angrenzend angeordnet jeweils zwischen den Seitenteilen 303L, 303R des Unterteils 21 ausgebildet. Die erste und die dritte Teilhaltevorrichtung 35A, 35C sind dabei jeweils verlagerbar relativ zu der zweiten Teilhaltevorrichtung 35B ausgebildet.

Die Teilhaltevorrichtungen 35A, 35B, 35C sind jeweils dazu ausgelegt, die jeweiligen linken und rechten Seitenteile 301L, 301R, 303L, 303R, 305L, 305R in einer stehenden, das heißt vertikalen, Position zu halten. Hierzu kann die Haltevorrichtung 35 der zweiten Fügestation 102 an ihren drei Teilhaltevorrichtungen 35A, 35B, 35C jeweils Hellings 63A, 63B, 63C aufweisen. Die Hellings 63B für das Mittelteil 17 sind dabei vorzugsweise ortsfest angebracht, wohingegen die Hellings 63A, 63C für das Oberteil 19 und das Unterteil 21 jeweils zusammen mit der ersten beziehungsweise dritten Teilhaltevorrichtung 35A, 35C relativ zu der Helling 63B der zweiten Teilhaltevorrichtung 35B horizontal verfahren werden können.

Ein mithilfe der zweiten Fügestation 102 durchzuführender zweiter Fügeschritt eines Herstellungsverfahrens gliedert sich dann in zwei Teilfügeschritte.

Während eines ersten Teilfügeschrittes, wie er in den Fig. 7 und 8 veranschaulicht ist, werden die jeweiligen Seitenteile 301, 303, 305 des Ober-, Mittel- und Unterteils 19, 17, 21 sowie die weiteren Fachwerkkomponenten 61A, 61B, 61C jeweils, beispielsweise mittels der Handlingroboter 38, angrenzend aneinander angeordnet und in entsprechenden Orientierungen gehalten. In dieser Position können sie dann mithilfe eines der Schweißroboter 37 zumindest positionierend vorläufig miteinander verschweißt werden und dadurch das vorpositionierte Oberteil 19, das vorpositionierte Mittelteil 17 und das vorpositionierte Unterteil 21 gebildet werden.

Genauer ausgedrückt werden die zwei Seitenteile 301R, 301L des Oberteils 19 sowie die weiteren Fachwerkkomponenten 61A angrenzend angeordnet jeweils zwischen den Seitenteilen 301L, 301R des Oberteils 19 in der ersten Teilhaltevorrichtung 35A gehalten. Die zwei Seitenteile 305L, 305R des Mittelteils 17 sowie weitere Fachwerkkomponenten 61B angrenzend angeordnet jeweils zwischen den Seitenteilen 305L, 305R des Mittelteils 17 werden in der zweiten Teilhaltevorrichtung 35B gehalten. Die zwei Seitenteile 303L, 303R des Unterteils 21 sowie die weiteren Fachwerkkomponenten 61C angrenzend angeordnet zwischen den jeweiligen Seitenteilen 303L, 303R werden in der dritten Teilhaltevorrichtung 35C gehalten.

Während dieses ersten Teilfügeschrittes des zweiten Fügeschrittes sind die erste und die dritte Teilhaltevorrichtung 35A, 35C noch in Längsrichtung von der zweiten Teilhaltevorrichtung 35B beabstandet angeordnet, wie dies in den Fig. 7 und 8 dargestellt ist. In einer solchen Konfiguration können die Schweißroboter 37 sowie etwaig vorzusehende Handlingroboter 38 der zweiten Fügestation 102 die jeweiligen Seitenteile 301, 303, 305 sowie die dazwischen anzuordnenden weiteren Fachwerkkomponenten 61A, 61B, 61C gut handhaben und miteinander positionierend verschweißen.

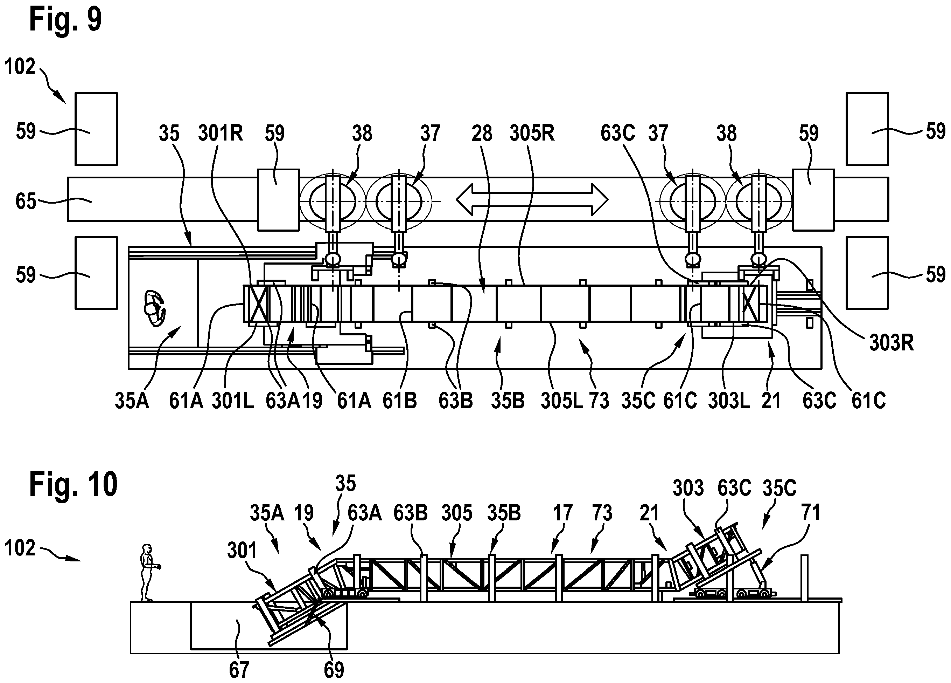

Die auf diese Weise in dem ersten Teilschritt hergestellten vorpositioniert zusammengeschweißten vorpositionierten Ober-, Mittel- und Unterteile 19, 17, 21 werden dann in einem zweiten Teilfügeschritt des zweiten Fügeschrittes, wie er in den Fig. 9 und 10 veranschaulicht ist, zu einer gesamten vorpositionierten Fachwerkstruktur 73 zusammengesetzt. Hierzu werden die erste und die dritte Teilhaltevorrichtung 35A, 35C zusammen mit den daran gehaltenen vorpositioniert zusammengeschweißten vorpositionierten Ober- und Unterteilen 19, 21 relativ zu der zweiten Teilhaltevorrichtung 35B und dem daran gehaltenen vorpositioniert zusammengeschweißten vorpositionierten Mittelteil 17 verlagert.

Das Verlagern der ersten und dritten Teilhaltevorrichtung 35A, 35C kann dabei einerseits ein laterales, im Regelfall horizontales Verfahren und andererseits auch ein Verschwenken beinhalten. Mit anderen Worten kann beispielsweise die erste Teilhaltevorrichtung 35A lateral an die zweite Teilhaltevorrichtung 35B herangefahren werden, bis ein seitliches Ende des auf der ersten Teilhaltevorrichtung 35A gehaltenen vorpositioniert zusammengeschweißten Oberteils 19 an ein gegenüberliegendes Ende des auf der zweiten Teilhaltevorrichtung 35B gelagerten vorpositioniert zusammengeschweißten vorpositionierten Mittelteils 17 angrenzt.

Zusätzlich zu einem solchen seitlichen Verfahren kann dann die erste Teilhaltevorrichtung 35A dazu ausgelegt sein, das vorpositionierte Oberteil 19 relativ zu dem vorpositionierten Mittelteil 17 zu verschwenken, um es in eine Orientierung zu bringen, wie sie später für das fertiggestellte Fachwerk 3 angestrebt wird. Mit anderen Worten können das Oberteil 19 und das Mittelteil 17 zwar zunächst in einer gleichen Ebene aufeinander zubewegt werden, dann wird jedoch das Oberteil 19 aus dieser Ebene heraus verschwenkt, so dass die Längserstreckungsrichtungen des Oberteils 19 und des Mittelteils 17 einen Winkel miteinander einschließen. Dieser Winkel entspricht im Wesentlichen dem Neigungswinkel, in dem später das Mittelteil 17 relativ zu dem im Allgemeinen horizontal anzuordnenden Oberteil 19 innerhalb eines Bauwerkes angeordnet sein soll.

In entsprechender Weise kann auch das Unterteil 21 zunächst lateral an das Mittelteil 17 herangefahren und anschließend relativ zu diesem verschwenkt werden.

Um beispielsweise das Oberteil 19 geeignet relativ zu dem Mittelteil 17 verschwenken zu können, kann die erste Teilhaltevorrichtung 35A dazu ausgelegt sein, ihre das Oberteil 19 haltenden Komponenten relativ zu der zweiten Teilhaltevorrichtung 35B zu verschwenken. Um eine für das letztendlich herzustellende Fachwerk 3 angestrebte Winkelanordnung des Oberteils 19 relativ zu dem Mittelteil 17 erreichen zu können, sollte für den Fall, dass das Mittelteil 17 ebenerdig und somit horizontal gehalten wird, das Oberteil 19 nach unten verschwenkt werden können. Hierzu kann an der ersten Teilhaltevorrichtung 35A eine ausreichend große Grube 67 vorgesehen sein, in die das von dem Mittelteil 17 weg gerichtete Ende des Oberteils 19 hinab verlagert werden kann. Zu diesem Zweck kann an der ersten Teilhaltevorrichtung 35A ein absenkbarer Schwenkmechanismus 69 vorgesehen sein.

In analoger Weise kann vorgesehen sein, während des zweiten Teilfügeschrittes des zweiten Fügeschrittes das zuvor vorpositionierend zusammengeschweißte Unterteil 21 lateral hin zu dem Mittelteil 17 zu verfahren und relativ zu diesem zu verschwenken. Die dritte Teilhaltevorrichtung 35C kann hierzu über einen anhebbaren Schwenkmechanismus 71 verfügen, mithilfe dessen ein von dem Mittelteil 17 weg gerichtetes Ende des Unterteils 21 angehoben werden kann.

Der absenkbare Schwenkmechanismus 69 und der anhebbare Schwenkmechanismus 71 können beispielsweise mit einer Hydraulik ausgebildet werden. Insbesondere können sie dazu ausgelegt sein, das Oberteil 19 beziehungsweise das Unterteil 21 um einen Winkel von typischerweise bis zu 50°, meist zwischen 20° und 40°, häufig um einen Winkel von etwa 35°, nach unten beziehungsweise oben zu verschwenken.

Nachfolgend wird eine mögliche Ausgestaltung der zweiten Fügestation 102 sowie des dort durchzuführenden zweiten Fügeschrittes noch einmal unter Verwendung leicht anderer Formulierungen, das heißt nicht notwendigerweise mit den in den Patentansprüchen verwendeten Begrifflichkeiten, erläutert, um mögliche Ausgestaltungen der Herstellungsvorrichtung beziehungsweise des Herstellungsverfahrens noch weiter zu verdeutlichen.

In der zweiten Fügestation 102 werden die während des ersten Fügeschrittes zusammengesetzten Seitenteile 301, 303, 305 zusammen mit weiteren Bauteilen und Fachwerkkomponenten 5 letztendlich zum fertigen Fachwerk 3 zusammengefügt, wobei das Fachwerk 3 in diesem Verfahrensstadium zwar bereits seine endgültige Form, nicht jedoch notwendigerweise seine endgültige Lasttragfähigkeit aufweisen kann. Das Zusammenfügen erfolgt in zumindest zwei Teilfügeschritten.

Bei dem ersten Teilfügeschritt (Fig. 7 und 8) werden das rechte und das linke Seitenteil 301R, 301L des Oberteils 19 durch ein Einfügen weiterer Fachwerkkomponenten 61A wie zum Beispiel Querstreben 11 oder Ölblechen 28 mittels geschweißter Heftnähte miteinander verbunden. Dort, wo beispielsweise aus Stabilitätsgründen ein einfaches Heften nicht ausreicht, muss gegebenenfalls zumindest teilweise durchgeschweißt werden. Wo möglich, werden die Teile nur schweißend zusammengeheftet, das Durchschweißen erfolgt hauptsächlich in dem weiter unten beschriebenen dritten Fügeschritt.

Eine Aufteilung von schweißendem Heften und Durchschweißen in der zweiten Fügestation 102 beziehungsweise dem zweiten Fügeschritt kann nicht nur abhängig von einer gewünschten Stabilität, sondern auch abhängig von einer benötigten Zeit gewählt werden. Das heißt, dass eine Verweildauer des Fachwerkes in der zweiten Fügestation 102, das heißt eine Zeitdauer für den zweiten Fügeschritt, und eine entsprechende Verweildauer in der dritten Fügestation 103 in etwa gleich sein sollten, zumindest sofern eine gleiche Anzahl von Arbeitsplätzen in der zweiten Fügestation 102 und der dritten Fügestation 103 vorhanden sind. Selbstverständlich kann die Anzahl von Arbeitsplätzen in der zweiten und der dritten Fügestation 102, 103 auch unterschiedlich gewählt sein.

Dasselbe Heften beziehungsweise Schweißen erfolgt auch mit den Seitenteilen 305R, 305L, 303R, 303L des Mittelteils 17 beziehungsweise des Unterteils 21 sowie zwischen diese zwischengelagerten weiteren Fachwerkkomponenten 61B, 61C. Die im Rahmen dieses ersten Teilfügeschrittes des zweiten Fügeschrittes hergestellten vorpositionierten Ober-, Mittel- und Unterteile 19, 17, 21 weisen bereits den für ein Fachwerk 3 einer Personentransportanlage typischen U-förmigen Fachwerk-Querschnitt auf.

In dem zweiten Teilfügeschritt des zweiten Fügeschrittes werden dann das Oberteil 19, das Mittelteil 17 und das Unterteil 21 durch Schweißen miteinander verbunden. Hierzu können gegebenenfalls die gleichen Schweißroboter 37 eingesetzt werden, wie sie bereits während des ersten Teilfügeschrittes verwendet wurden.

Die zweite Fügestation 102 weist hierfür eine ortsfeste Helling 63B für das Mittelteil 17 sowie je eine verfahrbare Helling 63A für das Oberteil 19 und eine verfahrbare Helling 63C für das Unterteil 21 auf. Ferner sind zwei Handlingroboter 38 zusätzlich zu den zwei Schweißrobotern 37 vorgesehen. Sowohl die Schweißroboter 37 als auch die Handlingroboter 38 können auf einer Fahrbahn 65 für Roboter angeordnet sein, die sich parallel zur Längserstreckung des zu fertigenden Fachwerkes 3 erstreckt. Dadurch können die Roboter 37, 38 jeden Teil 17, 19, 21 des zu schweißenden Fachwerkes 3 erreichen.

Die Hellings 63A, 63B, 63C dienen der Aufnahme der vorgefertigten Seitenteile 301, 303, 305, die beispielsweise von Arbeitern mithilfe von Kränen in die Seitenaufnahme eingebracht und befestigt werden können. Die Hellings 63A, 63B, 63C, können ferner eine ebene Auflage aufweisen, auf die durch einen der Handlingroboter 38 zuerst die Ölbleche 28 und dann die Querstreben 11 gelegt werden. Anschließend werden diese weiteren Fachwerkkomponenten 28, 61A, 61B, 61C mit den jeweiligen Seitenteilen 301, 303, 305 schweißend zusammengeheftet und/oder zumindest teilweise durchgehend zusammengeschweißt. Der Handlingroboter 38 entnimmt die weiteren Fachwerkkomponenten 28, 61A, 61B, 61C vorzugsweise den Teilemagazinen 59.

Die fahrbare Helling 63A für das Unterteil 21 weist einen Hebe-Schwenkmechanismus 71 auf. Das fertig geheftete/geschweißte Unterteil 21 wird mittels dieses Hebe-Schwenkmechanismus 71 im Rahmen des zweiten Teilfügeschrittes verschwenkt, indem sein dem Mittelteil 17 abgewandtes Ende angehoben wird. Dann wird die Helling 63C des Unterteils 21 an das zuvor fertig geheftete/geschweißte Mittelteil 17 herangefahren und mit diesem durch Schweißen, heftend oder zumindest teilweise durchgehend, verbunden.

Die fahrbare Helling 63A für das Oberteil 19 weist einen Senk-Schwenkmechanismus 69 auf. Das fertig geheftete/geschweißte Oberteil 19 wird im Rahmen des zweiten Teilschrittes des zweiten Fügeschrittes verschwenkt, indem sein dem Mittelteil 17 abgewandtes Ende abgesenkt wird. Hierfür ist gegebenenfalls die Grube 67 vorgesehen, sofern die Helling 63B des Mittelteils 17 auf Bodenniveau ausgelegt ist. Anschließend wird die Helling 63A des Oberteils 19 an das fertig geheftete/geschweißte Mittelteil 17 herangefahren und mit diesem durch Schweißen, geheftet oder zumindest teilweise durchgehend, verbunden. Sämtliche Schweißarbeiten werden dabei durch einen der Schweißroboter 37 durchgeführt.

### d) Dritter Fügeschritt an der dritten Fügestation 103

Nachdem in der zweiten Fügestation 102 mittels des zweiten Fügeschrittes zunächst die vorpositionierten Ober-, Mittel- und Unterteile 19, 21, 17 aus vorläufig mittels Heftschweißungen miteinander verbundenen Seitenteilen 301, 303, 305 und zusätzlichen Fachwerkkomponenten 28, 61A, 61B, 61C zusammengefügt wurden und dann das Ober-, Unter- und Mittelteil 19, 21, 17 vorläufig positionierend vorzugsweise durch Heftschweißverbindungen zu der gesamten vorpositionierten Fachwerkstruktur 73 zusammengefügt wurde, wird in einem in der dritten Fügestation 103 durchzuführenden dritten Fügeschritt diese zunächst noch nicht lasttragfähige vorpositionierte Fachwerkstruktur 73 durch ein lasttragendes Zusammenschweißen ihrer Fachwerkkomponenten 5, 61 mittels durchgehender Schweißverbindungen zu dem letztendlich zu fertigenden lasttragfähigen Fachwerk 3 weiterverarbeitet.

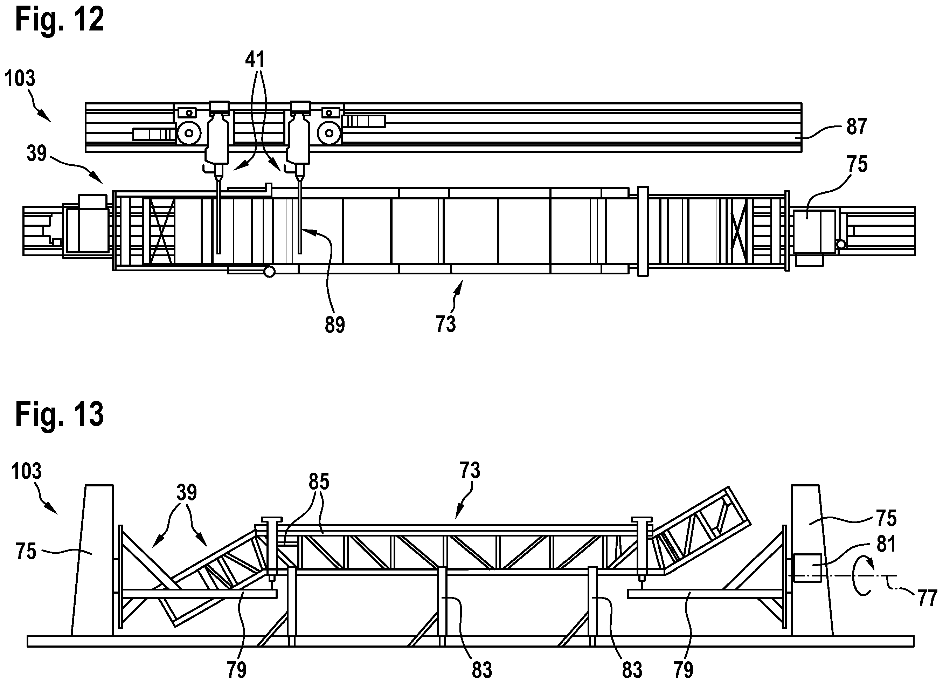

In den Fig. 12 bis 14 ist beispielhaft eine hierfür einzusetzende dritte Fügestation 103 in Draufsicht, Seitenansicht beziehungsweise perspektivischer Ansicht dargestellt. In Fig. 13 ist dabei aus Übersichtlichkeitsgründen auf die Wiedergabe der Schweißroboter 41 verzichtet worden.

Die dritte Fügestation 103 verfügt über eine Haltevorrichtung 39, welche dazu ausgelegt ist, die gesamte bereits vorpositionierte Fachwerkstruktur 73 geeignet zu halten und gegebenenfalls zu bewegen, so dass ihre zuvor nur durch Heftschweißungen vorpositionierend zusammengefügten Fachwerkkomponenten mithilfe der Schweißroboter 41 lasttragend zusammengeschweißt werden können.

Beispielsweise kann die Haltevorrichtung 39 der dritten Fügestation 103 dazu ausgelegt sein, die gesamte vorpositionierte Fachwerkstruktur 73 um eine Längsachse derselben herum zu drehen.

Hierzu kann die Haltevorrichtung 39 über eine Wendevorrichtung 75 verfügen, an der eine Bauteilaufnahme 79 angebracht ist, die mithilfe eines Motors 81 um eine Drehachse 77 herum gedreht werden kann, beispielsweise um bis zu 90° oder 180°, vorzugsweise um bis zu 360°.

Um die im zweiten Fügeschritt vorpositioniert zusammengefügte Fachwerkstruktur 73 im dritten Fügeschritt dann lasttragfähig zu verschweißen, wird diese zunächst an der Wendevorrichtung 75 fixiert. Hierbei kann die noch nicht lasttragfähige vorpositionierte Fachwerkstruktur 73 zwischenzeitlich über Ablagestützen 83 abgestützt werden. Zusätzlich kann ein vorübergehend an der vorpositionierten Fachwerkstruktur 73 angebrachtes Stützgerüst 85 dazu dienen, die Fachwerkstruktur 73 so lange zu stützen, bis diese in dem dritten Fügeschritt ausreichend lasttragfähig verschweißt ist.

Sobald die vorpositionierte Fachwerkstruktur 73 auf diese Weise an der als Haltevorrichtung 39 dienenden Wendevorrichtung 75 befestigt ist, kann diese um die Drehachse 77 herum die gesamte vorpositionierte Fachwerkstruktur 73 drehen.

Seitlich neben der Wendevorrichtung 75 angeordnete und entlang einer verfahrbaren Bahn 87 parallel zu der Wendevorrichtung 75 verfahrbare Schweißroboter 41 können dann, nachdem die vorpositionierte Fachwerkstruktur 73 geeignet um die Drehachse 77 gedreht wurde, mithilfe ihrer Schweißköpfe 89 an alle zu verschweißenden Grenzflächen zwischen benachbarten Fachwerkkomponenten 5 der Fachwerkstruktur 73 gelangen und diese durch Erzeugen durchgehender Schweißnähte lasttragend miteinander verbinden.

Mit leicht anderen Formulierungen ausgedrückt werden die im zweiten Fügeschritt zunächst meist nur gehefteten Schweißnähte im dritten Fügeschritt durchgeschweißt. Die hierfür vorgesehene dritte Fügestation 103 kann hierbei Ablagestützen 83 zur Aufnahme der gehefteten Fachwerkstruktur 73 aufweisen. Zu beiden Seiten sind Wendevorrichtungen 75 angeordnet, deren drehbare Aufnahmen 79 vorzugsweise in der Z-Achse verschiebbar sind, das heißt in der Höhe verlagerbar sind, so dass die Fachwerkstruktur 73 von den Ablagestützen 83 abgehoben und anschließend um die Drehachse 77 gewendet werden kann. Die dritte Fügestation 103 ist ferner mit vorzugsweise zwei Schweißrobotern 41 ausgerüstet. Gegebenenfalls kann ein Stützgerüst 85 erforderlich sein, welches bereits am Ende des zuvor durchgeführten zweiten Fügeschrittes, beispielsweise nach dem Heftschweißen, angebaut wird und zur Stabilisierung der gehefteten vorpositionierten Fachwerkstruktur 73 beim Transport von der zweiten Fügestation 102 zur dritten Fügestation 103 dienen kann. Dieses Stützgerüst 85 kann gegebenenfalls auch in der dritten Fügestation 103 an der Fachwerkstruktur 73 verbleiben, bis deren Schweißnähte durchgeschweißt sind.

Im Anschluss werden einige mögliche weitere Merkmale von Ausführungsformen der Erfindung erläutert. Sofern nicht anders angegeben, können diese Merkmale in allen drei Fügestationen 101, 102, 103 implementiert werden.

Insbesondere in der ersten und der zweiten Fügestation 101, 102 kann eine dort vorgesehene Haltevorrichtung 31, 35 dazu ausgelegt sein, jeweilige Fachwerkkomponenten 5 beziehungsweise Seitenteile 301, 303, 305 passiv stationär zu halten. Die Haltevorrichtungen 31, 35 können dabei beispielsweise als einfache, stationäre Tische ausgestaltet sein, die die zu haltenden Komponenten lediglich von unten her abstützen. Gegebenenfalls können zusätzlich Einspannvorrichtungen vorgesehen sein, um die Komponenten ergänzend gegen ein seitliches Verrutschen sichern zu können.

Alternativ oder ergänzend können insbesondere die Haltevorrichtungen 31, 35 der ersten und zweiten Fügestation 101, 102 wenigstens einen Handlingroboter 313, 321, 38 aufweisen, der dazu ausgelegt ist, jeweilige Fachwerkkomponenten 5 beziehungsweise Seitenteile 301, 303, 305 aktiv bewegend zu handhaben. Ein solcher Handlingroboter 313, 321, 38 kann beispielsweise mit einem Greif- oder Haltemechanismus versehen sein, mithilfe dessen er die Fachwerkkomponenten 5 beziehungsweise Seitenteile 301, 303, 305 greifen beziehungsweise halten kann. Dieser Greif- beziehungsweise Haltemechanismus kann relativ zu einer Basis des Handlingroboters verlagerbar sein, beispielsweise indem dieser an einem verlagerbaren und/oder verschwenkbaren Arm angebracht ist. Je nach Anwendungsfall kann eine Verlagerung in ein, zwei oder drei Raumrichtungen und/oder eine Orientierung in ein, zwei oder drei Raumwinkeln möglich sein.

Insbesondere die erste und/oder zweite Fügestation 101, 102 kann ergänzend ein Teilemagazin 59 zum Lagern und Bereitstellen von Bauteilen für die Fachwerkkomponenten 5 aufweisen. Ein Handlingroboter 313, 321, 38 kann in diesem Fall dazu ausgelegt sein, Bauteile aus dem Teilemagazin 59 zu entnehmen und gezielt an eine vorbestimmbare Position an der Haltevorrichtung 31, 35 zu bringen.

Die in den verschiedenen Fügestationen 101, 102, 103 vorzusehenden Schweißroboter 33, 37, 41 können jeweils gleich ausgestaltet sein, können sich aber auch voneinander je nach anwendungsspezifischen Erfordernissen unterscheiden. Die Schweißroboter 33, 37, 41 können insbesondere einen Schweißkopf 310 zum Durchführen der Zusammenschweißungen aufweisen und dazu ausgelegt sein, den Schweißkopf 310 mit wenigstens drei translatorischen, vorzugsweise drei translatorischen und drei rotatorischen, Bewegungsfreiheitsgraden zu verlagern.

Mit anderen Worten kann ein Schweißroboter insbesondere dazu ausgelegt sein, seinen Schweißkopf 310 translatorisch in drei zueinander orthogonalen Ebenen verlagern zu können. Vorzugsweise kann ergänzend vorgesehen sein, den Schweißkopf 310 auch rotatorisch um drei zueinander orthogonale Achsen verschwenken zu können. Ein solcher Schweißroboter kann seinen Schweißkopf 310 innerhalb eines Arbeitsbereichs in eine beliebige Position und Orientierung im Raum bringen. Dadurch kann der Schweißroboter auch geometrisch komplexe Schweißvorgänge durchführen. Beispielsweise können Verschweißungen an schwer zugänglichen Stellen und/oder geometrisch komplex, insbesondere nicht-linear-geformte Schweißnähte erzeugt werden.

Gegebenenfalls können aber auch einfacher aufgebaute Schweißroboter eingesetzt werden, welche einen Schweißkopf beispielsweise nur entlang einer oder zwei Richtungen verlagern können und/oder den Schweißkopf nicht oder nur um eine oder zwei Achsen verschwenken können.

In einer speziellen Ausgestaltung des Fügeverfahrens kann bereits während des zweiten Fügeschrittes auch teilweise ein lasttragendes Zusammenschweißen der Fachwerkkomponenten der gesamten vorpositionierten Fachwerkstruktur durch Erzeugen von durchgehenden Schweißverbindungen zu dem lasttragfähigen Fachwerk mittels wenigstens eines Schweißroboters durchgeführt werden. Mit anderen Worten sollen in dem zweiten Fügeschritt nicht lediglich positionierende Verschweißungen, das heißt beispielsweise Heftverschweißungen, vorgenommen werden, sondern ergänzend können auch teilweise durchgehende und somit lasttragfähige Schweißnähte zwischen Fachwerkkomponenten erzeugt werden. Ein Ausmaß der während des zweiten und während des nachfolgenden dritten Fügeschrittes durchgeführten Schweißvorgänge sollte dabei vorzugsweise derart aufeinander abgestimmt werden, dass der zweite und der dritte Fügeschritt im Wesentlichen gleich lange dauern.

Mit anderen Worten kann für den Fall, dass ein vollständiges Durchschweißen im dritten Fügeschritt der zuvor im zweiten Fügeschritt lediglich heftgeschweißten vorpositionierten Fachwerkstruktur 73 deutlich länger dauern würde als der gesamte zweite Fügeschritt, ein Teil dieser Durchschweißvorgänge bereits in den zweiten Fügeschritt vorverlagert werden, so dass beide Fügeschritte etwa gleich viel Zeit benötigen. Eine gesamte Taktzeit innerhalb der Fertigungslinie 200 kann auf diese Weise verkürzt werden.

Im Rahmen einer auftragsspezifischen Fertigung von Tragwerken für Personentransportanlagen können beispielsweise entsprechende Datensätze aus CAD-Systemen an eine Fertigungssteuerung der Herstellungsvorrichtung übermittelt werden, so dass beispielsweise die Handlingroboter der verschiedenen Fügestationen geeignete Bauteile oder Fachwerkkomponenten aus Teilemagazinen holen können und an vorgegebene Positionen legen können und die Schweißroboter stets richtige Positionen anfahren können.

Es ist auch denkbar, dass ein Zuschnitt von Obergurten und Untergurten für ein Tragwerk an einem benachbarten Arbeitsplatz der ersten Fügestation erfolgt, so dass solche auftragsspezifischen Bauteile unmittelbar vor deren Weiterverarbeitung in der ersten Fügestation hergestellt werden.

Denkbar ist auch eine Fertigung ohne jegliche statische Vorrichtungen wie beispielsweise Tische, indem ein oder mehrere Handlingroboter alle miteinander zu verbindenden Teile oder Fachwerkkomponenten halten, bis ein Schweißroboter diese an einem bereits zuvor erstellten Fachwerkstück angeschweißt hat.

Zusammenfassend werden hierin eine Vorrichtung 100 sowie eine Fertigungslinie 200 beziehungsweise ein damit durchzuführendes Verfahren zum Herstellen eines Tragwerkes 1 für eine Personentransportanlage wie z.B. eine Fahrtreppe beschrieben, welche eine sequenzielle Anordnung von teil- oder vollautomatisiert arbeitenden und miteinander kooperierenden Fügestationen 101, 102, 103 beziehungsweise eine sequentielle Abfolge von Fügeschritten aufweisen. Jede der Fügestationen 101, 102, 103 weist Komponenten und Maschinen in Form wenigstens einer Haltevorrichtung 31, 35, 39 und wenigstens eines Schweißroboters 33, 37, 41 sowie optional wenigstens eines Handlingroboters 38, 313, 321 auf. Die Fügestationen 101, 102, 103 sind hinsichtlich der in ihnen verwendeten Komponenten und Maschinen derart ausgelegt, dass Zwischenprodukte mittels jeweilige Fügeschritte effizient und jeweils abgestimmt auf eine nachfolgende Fügestation gefertigt werden können, sodass die Zwischenprodukte sequentiell und mit optimiert kurzen Taktzeiten von Fügestation zu Fügestation weitergegeben werden können, um am Ende der Sequenz ein fertiges, lasttragfähiges Tragwerk 1 bereitstellen zu können.

Die hierin vorgestellte Herstellungsvorrichtung beziehungsweise Fertigungslinie sowie das damit vorzugsweise durchführbare Herstellungsverfahren können gegenüber einer herkömmlichen Fertigung von Tragwerken von Personentransportanlagen etliche technische wie auch wirtschaftliche Vorteile mit sich bringen. Beispielsweise kann mit dem vorgeschlagenen Herstellungsverfahren eine Fertigungszeit erheblich reduziert werden und damit eine Fertigungsrate pro benötigter Werkfläche erhöht werden. Ferner ist eine Qualität von das Tragwerk zusammenhaltenden Schweißnähten durch die eingesetzte Automatisierung und die verwendeten Schweißroboter meist höher als bei herkömmlichem manuellen Schweißen. Weiterhin erfordert das vorgeschlagene Verfahren beziehungsweise der Einsatz der vorgeschlagenen Herstellvorrichtung weniger Fertigungspersonal und insbesondere weniger hochqualifiziertes Fertigungspersonal wie zertifizierte Schweißer. Schließlich ermöglicht das vorgestellte Herstellverfahren einen deutlich reduzierten Verzug für das hergestellte Tragwerk, da im Fall von zwei eingesetzten Schweißrobotern ein Schweißvorgang beispielsweise an beiden Enden des Fachwerkes begonnen und dann hin zur Mitte des Fachwerkes fortgesetzt werden kann und daher ein Wärmeeintrag symmetrisch erfolgen kann. Insgesamt lässt sich eine Herstellung von Tragwerken für Personentransportanlagen mit höherer Qualität bei geringeren Kosten durchführen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (100) zum Herstellen eines Tragwerkes (1) für eine Personentransportanlage,
wobei das Tragwerk (1) ein Fachwerk (3) mit einem Unterteil (21), einem Mittelteil (17) und einem Oberteil (19) jeweils aus miteinander verbundenen lasttragenden Fachwerkkomponenten (5)
aufweist,
wobei die Vorrichtung (100) eine sequenzielle Anordnung von teil- oder vollautomatisiert arbeitenden und miteinander kooperierenden Fügestationen (101, 102, 103) aufweist, wobei die sequenzielle Anordnung umfasst:
eine erste Fügestation (101) mit
- wenigstens einer Haltevorrichtung (31) zum Halten von Fachwerkkomponenten (5) und
- wenigstens einem Schweißroboter (33) zum Zusammenschweißen der Fachwerkkomponenten (5) jeweils zu Seitenteilen (303R, 303L) des Unterteils (21), Seitenteilen (305R,305L) des Mittelteils (17) und Seitenteilen (301R, 301L) des Oberteils (19) des Fachwerkes (3); und
eine zweite Fügestation (102) zum positionierenden Zusammenschweißen der in der ersten Fügestation (101) zusammengeschweißten Seitenteile (303R, 303L) des Unterteils (21), der Seitenteile (305R, 305L) des Mittelteils (17) und der Seitenteile (301R, 301L) des Oberteils (19) mit weiteren Fachwerkkomponenten (61A, 61B, 61C).

2. Vorrichtung nach Anspruch 1, wobei die zweite Fügestation (102) umfasst:
- wenigstens eine Haltevorrichtung (35)
zum Halten der Seitenteile (303R, 303L) des Unterteils (21), der Seitenteile (305R, 305L) des Mittelteils (17) und der Seitenteile (301R, 301L) des Oberteils (19) und
zum Halten von weiteren Fachwerkkomponenten (61A, 61B, 61C) angrenzend angeordnet jeweils zwischen den Seitenteilen (301, 303, 305) des Unterteils (21), des Mittelteils (17) und des Oberteils (19), und
- wenigstens einen Schweißroboter (37)
zum positionierenden Zusammenschweißen der weiteren Fachwerkkomponenten (61A, 61B, 61C) mit den jeweils angrenzend angeordneten Seitenteilen (301, 303, 305) des Unterteils (21), des Mittelteils (17) beziehungsweise des Oberteils (19) jeweils zu einem vorpositionierten Unterteil (21), einem vorpositionierten Mittelteil (17) beziehungsweise einem vorpositionierten Oberteil (19),
und
zum positionierenden Zusammenschweißen des vorpositionierten Unterteils (21) und des vorpositionierten Oberteils (19) jeweils an entgegengesetzte Enden des vorpositionierten Mittelteils (17) zu einer vorpositionierten Fachwerkstruktur (73).

3. Vorrichtung nach Anspruch 2, wobei diese eine dritte Fügestation (103) umfasst, die eine Haltevorrichtung (39) zum Halten der vorpositionierten Fachwerkstruktur (73), und wenigstens einen Schweißroboter (41) zum lasttragenden Zusammenschweißen der Fachwerkkomponenten (5, 61A, 61B, 61C) der gesamten vorpositionierten Fachwerkstruktur (73) zu dem lasttragfähigen Fachwerk (3), aufweist.

4. Vorrichtung nach Anspruch 3, wobei die Haltevorrichtung (35) der zweiten Fügestation (102) aufweist:
eine erste Teilhaltevorrichtung (35A) zum Halten der Seitenteile (303R, 303L) des Oberteils (21) und zum Halten von weiteren Fachwerkkomponenten (61C) angrenzend angeordnet jeweils zwischen den Seitenteilen des Oberteils,
eine zweite Teilhaltevorrichtung (35B) zum Halten der Seitenteile (305R, 305L) des Mittelteils (17) und zum Halten von weiteren Fachwerkkomponenten (61B) angrenzend angeordnet jeweils zwischen den Seitenteilen des Mittelteils,
eine dritte Teilhaltevorrichtung (35C) zum Halten der Seitenteile (301R, 301L) des Unterteils (19) und zum Halten von weiteren Fachwerkkomponenten (61A) angrenzend angeordnet jeweils zwischen den Seitenteilen des Unterteils,
wobei zwei Teilhaltevorrichtungen (35A, 35C) der drei Teilhaltevorrichtungen (35A, 35B, 35C) jeweils verlagerbar relativ zu einer Teilhaltevorrichtung (35B) der drei Teilhaltevorrichtungen (35A, 35B, 35C) sind.

5. Vorrichtung nach Anspruch 4, wobei die erste und die dritte Teilhaltevorrichtung (35A, 35C) dazu ausgelegt sind, jeweils das vorpositionierte Unterteil (21) beziehungsweise das vorpositionierte Oberteil (19) relativ zu dem vorpositionierten Mittelteil (17) zu verschwenken.

6. Vorrichtung nach einem der vorangehenden Ansprüche 3 bis 5, wobei die Haltevorrichtung (39) der dritten Fügestation (103) dazu ausgelegt ist, die vorpositionierte Fachwerkstruktur (73) um eine Längsachse (75) derselben herum zu drehen.

7. Vorrichtung nach einem der vorangehenden Ansprüche 3 bis 6, wobei die Haltevorrichtung (31, 35) zumindest einer der ersten und zweiten Fügestation (101, 102) dazu ausgelegt ist, jeweilige Fachwerkkomponenten (5, 61A, 61B, 61C) beziehungsweise Seitenteile (301, 303, 305) passiv stationär zu halten.

8. Vorrichtung nach einem der vorangehenden Ansprüche 3 bis 7, wobei die Haltevorrichtung (31, 35) zumindest einer der ersten und zweiten Fügestation (101, 102) wenigstens einen Handlingroboter (313, 321, 38) aufweist, der dazu ausgelegt ist, jeweilige Fachwerkkomponenten (5, 61A, 61B, 61C) beziehungsweise Seitenteile (301, 303, 305) aktiv bewegend zu handhaben.

9. Vorrichtung nach Anspruch 8, wobei zumindest eine der ersten und zweiten Fügestation (101, 102) ergänzend wenigstens ein Teilemagazin (59) zum Lagern und Bereitstellen von Bauteilen für die Fachwerkkomponenten (5) aufweist und wobei der Handlingroboter (313, 321, 38) dazu ausgelegt ist, Bauteile aus dem Teilemagazin (59) zu entnehmen und gezielt an eine vorbestimmbare Position an der Haltevorrichtung (31, 35) zu bringen.

10. Vorrichtung nach einem der vorangehenden Ansprüche 3 bis 9, wobei die erste Fügestation (101) aufweist:
- zwei erste Haltevorrichtungen (307) zum Halten jeweils von Fachwerkkomponenten des Unterteils (21) beziehungsweise des Oberteils (19), und
- zu jeder ersten Haltevorrichtung (307) zugeordnet jeweils einen Schweißroboter (309) zum Zusammenschweißen der Fachwerkkomponenten (5) des Unterteils (21) beziehungsweise des Oberteils (19) jeweils zu zwei Seitenteilen (303R, 303L) des Unterteils und zwei Seitenteilen (301R, 301L) des Oberteils des Fachwerkes (3);
- zu jeder ersten Haltevorrichtung (307) zugeordnet einen Handlingroboter (313), der dazu ausgelegt ist, jeweilige Fachwerkkomponenten (5) des Unterteils (21) beziehungsweise des Oberteils (19) aktiv bewegend zu handhaben,
- eine zweite Haltevorrichtung (315) zum Halten von Fachwerkkomponenten (5) des Mittelteils (17), und
- zwei zu der zweiten Haltevorrichtung (315) zugeordnete Schweißroboter (319) zum Zusammenschweißen der Fachwerkkomponenten (5) des Mittelteils (17) zu zwei Seitenteilen (305R, 305L) des Mittelteils des Fachwerkes;
- zwei zu der zweiten Haltevorrichtung (315) zugeordnete Handlingroboter (321), die dazu ausgelegt ist, jeweilige Fachwerkkomponenten (5) des Mittelteils (17) aktiv bewegend zu handhaben.

11. Vorrichtung nach einem der vorangehenden Ansprüche 3 bis 10, wobei der Schweißroboter (33, 37, 41) zumindest einer der ersten, zweiten und dritten Fügestation (101, 102, 103, 309, 319) einen Schweißkopf (310) zum Durchführen der Zusammenschweißungen aufweist und dazu ausgelegt ist, den Schweißkopf (310) wenigstens mit drei translatorischen, vorzugsweise drei translatorischen und drei rotatorischen, Bewegungsfreiheitsgraden zu verlagern.

12. Vorrichtung nach einem der vorangehenden Ansprüche 3 bis 11, wobei der Schweißroboter (101, 102, 103, 309, 319) zumindest einer der ersten, zweiten und dritten Fügestation (101, 102, 103) dazu ausgelegt ist, seine eigene Position in einer Richtung (324) parallel zu einer Längserstreckungsrichtung des Unterteils (21), des Mittelteils (17) beziehungsweise des Oberteils (19) translatorisch zu verlagern.

13. Vorrichtung nach einem der vorangehenden Ansprüche, ferner aufweisend eine Vorfügestation (110) mit
- wenigstens einer Haltevorrichtung (43) zum Halten von Rohkomponenten (47) und daran anzubringenden Anbaukomponenten (49) und
- wenigstens einem Schweißroboter (45) zum Zusammenschweißen der Rohkomponenten (47) und der daran anzubringenden Anbaukomponenten (49) zu Fachwerkkomponenten (5).

14. Vorrichtung nach Anspruch 13, wobei die Haltevorrichtung (43) der Vorfügestation (110) dazu ausgelegt ist, die Rohkomponenten (47) und daran anzubringenden Anbaukomponenten (49) gemeinsam um eine Rotationsachse (57) zu drehen.

15. Fertigungslinie (200) zum Herstellen von Tragwerken (1) für Personentransportanlagen mit Vorrichtungen gemäß einem der Ansprüche 4 bis 14, wobei die Fertigungslinie aufweist:
erste Fügestationen (101) mit
- zwei ersten Haltevorrichtungen (307) zum Halten von Fachwerkkomponenten (5) des Unterteils (21) beziehungsweise des Oberteils (19), und
- zu jeder ersten Haltevorrichtung (307) zugeordnet jeweils einen Schweißroboter (309) zum Zusammenschweißen der Fachwerkkomponenten (5) des Unterteils (21) beziehungsweise des Oberteils (19) jeweils zu zwei Seitenteilen (303R, 303L) des Unterteils (21) und zwei Seitenteilen (301R, 301L) des Oberteils (19) des Fachwerkes (3);
- zu jeder ersten Haltevorrichtung (307) zugeordnet einen Handlingroboter (313), der dazu ausgelegt ist, jeweilige Fachwerkkomponenten (5) des Unterteils (21) beziehungsweise des Oberteils (19) aktiv bewegend zu handhaben,
- drei zweite Haltevorrichtungen (315) zum Halten von Fachwerkkomponenten (5) des Mittelteils (17), und
- jeweils zwei zu jeder zweiten Haltevorrichtung (315) zugeordnete Schweißroboter (319) zum Zusammenschweißen der Fachwerkkomponenten (5) des Mittelteils (17) zu zwei Seitenteilen (305R, 305L) des Mittelteils (17) des Fachwerkes (3);
- jeweils zwei zu jeder zweiten Haltevorrichtung (315) zugeordnete Handlingroboter (321), die dazu ausgelegt ist, jeweilige Fachwerkkomponenten (5) des Mittelteils (17) aktiv bewegend zu handhaben;
zweite Fügestationen (102) mit
- drei Haltevorrichtungen (35)
zum Halten der jeweils zwei Seitenteile (303) des Unterteils (21), zwei Seitenteile (305) des Mittelteils (17) und zwei Seitenteile (301) des Oberteils (19) und
zum Halten von weiteren Fachwerkkomponenten (61A, 61B, 61C) angrenzend angeordnet jeweils zwischen den Seitenteilen (301, 303, 305) des Unterteils (21), des Mittelteils (17) und des Oberteils (19), und
- jeweils zwei zu jeder Haltevorrichtung (35) zugeordnete Schweißroboter (37)
zum positionierenden Zusammenschweißen der weiteren Fachwerkkomponenten (61A, 61B, 61C) mit den jeweils angrenzend angeordneten Seitenteilen (301, 303, 305) des Unterteils (21), des Mittelteils (17) beziehungsweise des Oberteils (17) jeweils zu einem vorpositionierten Unterteil (21), einem vorpositionierten Mittelteil (17) beziehungsweise einem vorpositionierten Oberteil (19),
und
zum positionierenden Zusammenschweißen des vorpositionierten Unterteils (21) und des vorpositionierten Oberteils (19) jeweils an entgegengesetzte Enden des vorpositionierten Mittelteils (17) zu einer gesamten vorpositionierten Fachwerkstruktur (73);
- jeweils zwei zu jeder Haltevorrichtung (35) zugeordnete Handlingroboter (38), die dazu ausgelegt sind, die jeweiligen weiteren Fachwerkkomponenten (61A, 61B, 61C) aktiv bewegend zu handhaben;
dritte Fügestationen (103) mit
- drei Haltevorrichtungen (39) jeweils zum Halten einer der gesamten vorpositionierten Fachwerkstrukturen (73),
- jeweils zwei zu jeder Haltevorrichtung (39) zugeordnete Schweißroboter (41) zum lasttragenden Zusammenschweißen der Fachwerkkomponenten (5) der jeweiligen gesamten vorpositionierten Fachwerkstruktur (73) zu dem lasttragfähigen Fachwerk (3).

## Claims

1. A device (100) for manufacturing a supporting structure (1) for a passenger transport system, wherein the supporting structure (1) has a frame-work (3) with load-bearing frame-work components (5) interconnected to a lower part (21), a middle part (17) and an upper part (19), respectively,
wherein the device (100) has a sequential arrangement of assembly stations (101, 102, 103), semi- or fully automatically operating and cooperating with each other,
wherein the sequential arrangement comprises:
a first assembly station (101), having
- at least one holding device (31) for holding frame-work components (5) and
- at least one welding robot (33) for welding-together the frame-work components (5), each to the side parts (303R, 303L) of the lower part (21), the side parts (305R, 305L) of the middle part (17), and the side parts (301R, 301L) of the upper part (19) of the framework (3); and
a second assembly station (102) for positionally welding-together the side parts (303R, 303L) of the lower part (21), the side parts (305R, 305L) of the middle part (17) and the side parts (301R, 301L) of the upper part (19), welded-together in the first assembly station (101), with other frame-work components (61A, 61B, 61C).

2. The device according to claim 1, wherein the second assembly station (102) comprises:
- at least one holding device (35)
for holding the side parts (303R, 303L) of the lower part (21), the side parts (305R, 305L) of the middle part (17), and the side parts (301R, 301L) of the upper part (19), and
for holding other frame-work components (61A, 61B, 61C), each adjacently arranged between the side parts (301, 303, 305) of the lower part (21), the middle part (17), and the upper part (19), and
- at least one welding robot (37)
for positionally welding-together the other frame-work components (61A, 61B, 61C) with the respectively adjacently arranged side parts (301, 303, 305) of the lower part (21), the middle part (17) and the upper part (19), respectively to a pre-positioned lower part (21), a pre-positioned middle part (17) and a pre-positioned upper part (19), and
for positionally welding-together the pre-positioned lower part (21) and the pre-positioned upper part (19) respectively at the opposite ends of the pre-positioned middle part (17) to a pre-positioned a frame-work structure (73).

3. The device according to claim 2, wherein it comprises a third assembly station (103), which has a holding device (39) for holding the pre-positioned frame-work structure (73), and at least one welding robot (41) for load-bearingly welding-together the frame-work components (5, 61A, 61B, 61C) of the entire pre-positioned frame-work structure (73) to the load-bearing framework (3).

4. The device according to claim 3, wherein the holding device (35) of the second assembly station (102) has:
a first part holding device (35A) for holding the side parts (303R, 303L) of the upper part (21) and for holding other frame-work components (61C), each adjacently arranged between the side parts of the upper part,
a second part holding device (35B) for holding the side parts (305R, 305L) of the middle part (17) and for holding other frame-work components (61B), each adjacently arranged between the side parts of the middle part,
a third part holding device (35C) for holding the side parts (301R, 301L) of the lower part (19) and for holding other frame-work components (61A), each adjacently arranged between the side parts of the lower part,
wherein the two part holding devices (35A, 35C) of the three part holding devices (35A, 35B, 35C) are each movable relative to the part holding device (35B) of the three part holding devices (35A, 35B, 35C).

5. The device according to claim 4, wherein the first and the third part holding device (35A, 35C) are configured in such a way that, in each case the pre-positioned lower part (21) or the pre-positioned upper part (19) are to pivot relative to the pre-positioned middle part (17).

6. The device according to any one of the preceding claims 3 to 5, wherein the holding device (39) of the third assembly station (103) is configured so as to rotate the pre-positioned frame-work structure (73) around a longitudinal axis (75) thereof.

7. The device according to any one of the preceding claims 3 to 6, wherein the holding device (31, 35) of at least one of the first and second assembly stations (101, 102) is configured so as to keep respective frame-work components (5, 61A, 61B, 61C) and side parts (301, 303, 305) passively stationary.

8. The device according to any one of the preceding claims 3 to 7, wherein the holding device (31, 35) of at least one of the first and second assembly stations (101, 102) has at least one handling robot (313, 321, 38), which is configured so as to manage respective frame-work components (5, 61A, 61B, 61C) and side parts (301, 303, 305) actively moving.

9. The device according to claim 8, wherein at least one of the first and second assembly stations (101, 102) additionally have at least one part-magazine (59) for storing and providing components for the frame-work components (5), and
wherein the handling robot (313, 321, 38) is configured so as to remove components from the part-magazine (59) and to bring targeted to a predeterminable position on the holding device (31, 35).

10. The device according to any one of the preceding claims 3 to 9, wherein the first assembly station (101) has:
- two first holding devices (307) for holding each of the frame-work components of the lower part (21) and the upper part (19), and
- in each case, a welding robot (309) associated with each first holding device (307), for welding-together the frame-work components (5) of the lower part (21) and the upper part (19), each to the two side parts (303R, 303L) of the lower part and two side parts (301R, 301L) of the upper part of the framework (3);
- a handling robot (313) associated with each first holding device (307), which is configured so as to manage the respective frame-work components (5) of the lower part (21) and the upper part (19) actively moving,
- a second holding device (315) for holding the frame-work components (5) of the middle part (17), and
- two welding robots (319) associated with the second holding device (315) for welding-together the frame-work components (5) of the middle part (17) to the two side parts (305R, 305L) of the middle part of the framework;
- two handling robots (321) associated with the second holding device (315), which is configured so as to manage the respective frame-work components (5) of the middle part (17) actively moving.

11. The device according to any one of the preceding claims 3 to 10, wherein the welding robot (33, 37, 41) of at least one of the first, second and third assembly stations (101, 102, 103, 309, 319) has a welding head (310) for carrying out the welding-together, and is configured so as to shift the welding head (310) at least with three translational, preferably three translational and three rotational, movement degrees of freedom.

12. The device according to any one of the preceding claims 3 to 11, wherein the welding robot (101, 102, 103, 309, 319) of at least one of the first, second and third assembly stations (101, 102, 103) is configured so as to translationally shift its own position in a direction (324) parallel to a longitudinal extension direction of the lower part (21), the middle part (17), and the upper part (19).

13. The device according to any one of the preceding claims, further comprising a pre-assembly station (110) with
- at least one holding device (43) for holding raw components (47) and accessory components (49) mounted thereon, and
- at least one welding robot (45) for welding-together the raw components (47) and the accessory components (49) mounted thereon, to the frame-work components (5).

14. The device according to claim 13, wherein the holding device (43) of the pre-assembly station (110) is configured so as to rotate the raw components (47) and the accessory components (49) mounted thereon, together around a rotation axis (57).

15. An assembly line (200) for manufacturing supporting structures (1) for passenger transport systems with devices according to any one of claims 4 to 14, wherein the assembly line has;
first assembly stations (101) with
- two first holding devices (307) for holding the frame-work components (5) of the lower part (21) and the upper part (19), and
- in each case, a welding robot (309) associated with each first holding device (307) for welding-together the frame-work components (5) of the lower part (21) and the upper part (19) respectively to the two side parts (303R, 303L) of the lower part (21) and the two side parts (301R, 301L) of the upper part (19) of the framework (3);
- a handling robot (313) associated with each first holding device (307), which is configured so as to manage the respective frame-work components (5) of the lower part (21) and the upper part (19) actively moving,
- three second holding devices (315) for holding the frame-work components (5) of the middle part (17), and
- in each case, two welding robots (319) associated with each second support device (315) for welding-together the frame-work components (5) of the middle part (17) to the two side parts (305R, 305L) of the middle part (17) of the framework (3);
- in each case, two handling robots (321) associated with each second support device (315), which is configured so as to manage the respective frame-work components (5) of the middle part (17) actively moving;
second assembly stations (102) with
- three holding devices (35)
for holding each of the two side parts (303) of the lower part (21), the two side parts (305) of the middle part (17), and the two side parts (301) of the upper part (19) and
for holding other frame-work components (61A, 61B, 61C), each adjacently arranged between the side parts (301, 303, 305) of the lower part (21), the middle part (17), and the upper part (19), and
- in each case, two welding robots (37) associated with each holding device (35) for positionally welding-together the other frame-work components (61A, 61B, 61C) with the respective adjacently arranged side parts (301, 303, 305) of the lower part (21), the middle part (17), and the upper part (17), each to a pre-positioned lower part (21), a pre-position middle part (17), and a pre-positioned upper part (19),
and
for positionally welding-together the pre-positioned lower part (21) and the pre-positioned upper part (19) at the respective opposite ends of the pre-positioned middle part (17) to an entire pre-positioned frame-work structure (73);
- in each case, two handling robots (38) associated with each holding device (35), which are configured so as to manage respective further frame-work components (61A, 61B, 61C) actively moving;
third assembly stations (103) with
- three holding devices (39) each for holding one of the entire pre-positioned frame-work structures (73),
- in each case, two welding robots (41) associated with each holding device (39) for load-bearingly welding-together the frame-work components (5) of each entire pre-positioned frame-work structure (73) to the load-bearing framework (3).

## Revendications

1. Dispositif (100) de fabrication d'une ossature porteuse (1) pour une installation de transport de personnes, dans lequel l'ossature porteuse (1) est constituée d'une charpente (3) comportant une partie inférieure (21), une partie centrale (17) et une partie supérieure (19), constituées chacune de composants de charpente (5) de support de charge interconnectés entre eux,
le dispositif (100) présentant un agencement séquentiel de stations d'assemblage (101, 102, 103) à fonctionnement partiellement ou entièrement automatisés et coopérant mutuellement, l'agencement séquentiel comprenant :
une première station d'assemblage (101) comportant
- au moins un dispositif de retenue (31) destiné à maintenir des composants de charpente (5), et
- au moins un robot de soudage (33) destiné à souder les composants de charpente (5) respectivement aux pièces latérales (303R, 303L) de la partie inférieure (21), aux pièces latérales (305R, 305L) de la partie centrale (17) et aux pièces latérales (301R, 301L) de la partie supérieure (19) de la charpente (3) ; et
une deuxième station d'assemblage (102) destinée à souder en position les pièces latérales (303R, 303L) de la partie inférieure (21) soudées dans la première station d'assemblage (101), les pièces latérales (305R, 305L) de la partie centrale (17) et les pièces latérales (301R, 301L) de la partie supérieure (19) avec d'autres composants de charpente (61A, 61B, 61C).

2. Dispositif selon la revendication 1, dans lequel la deuxième station d'assemblage (102) comprend :
- au moins un dispositif de retenue (35) destiné à maintenir les pièces latérales (303R, 303L) de la partie inférieure (21), les pièces latérales (305R, 305L) de la partie centrale (17) et les pièces latérales (301R, 301L) de la partie supérieure (19), et à maintenir d'autres composants de charpente (61A, 61B, 61C) disposés de manière adjacente chacun entre les pièces latérales (301, 303, 305) de la partie inférieure (21), de la partie centrale (17) et de la partie supérieure (19), et
- au moins un robot de soudage (37) destiné à souder en position les autres composants de charpente (61A, 61B, 61C) comportant les pièces latérales (301, 303, 305) respectivement disposées de manière adjacente de la partie inférieure (21), de la partie centrale (17) ou de la partie supérieure (19), respectivement à une partie inférieure (21) prépositionnée, à une partie centrale (17) prépositionnée et à une partie supérieure (19) prépositionnée, et à souder en position la partie inférieure (21) prépositionnée et la partie supérieure (19) prépositionnée, respectivement à des extrémités opposées de la partie centrale (17) prépositionnée, sur une structure de charpente (73) prépositionnée.

3. Dispositif selon la revendication 2, celui-ci comprenant une troisième station d'assemblage (103), laquelle comprend un dispositif de retenue (39) destiné à maintenir la structure de charpente (73) prépositionnée, et au moins un robot de soudage (41) pour le soudage de support de charge des composants de charpente (5, 61A, 61B, 61C) de l'ensemble de la structure de charpente (73) prépositionnée sur la charpente (3) porteuse de charge.

4. Dispositif selon la revendication 3, dans lequel le dispositif de retenue (35) de la deuxième station d'assemblage (102) comprend :
un premier dispositif de retenue de partie (35A) destiné à maintenir les pièces latérales (303R, 303L) de la partie supérieure (21) et à maintenir d'autres composants de charpente (61C) disposés de manière adjacente respectivement entre les pièces latérales de la partie supérieure, un deuxième dispositif de retenue de partie (35B) destiné à maintenir les pièces latérales (305R, 305L) de la partie centrale (17) et à maintenir d'autres composants de charpente (61B) disposés de manière adjacente respectivement entre les pièces latérales de la partie centrale,
un troisième dispositif de retenue de partie (35C) destiné à maintenir les pièces latérales (301R, 301L) de la partie inférieure (19) et à maintenir d'autres composants de charpente (61A) disposés de manière adjacente respectivement entre les pièces latérales de la partie inférieure,
deux dispositifs de retenue de pièce (35A, 35C) des trois dispositifs de retenue de pièce (35A, 35B, 35C) étant chacun déplaçables par rapport à un dispositif de retenue de partie (35B) des trois dispositifs de retenue de pièce (35A, 35B, 35C).

5. Dispositif selon la revendication 4, dans lequel le premier et le troisième dispositif de retenue de pièce (35A, 35C) sont conçus pour faire pivoter respectivement la partie inférieure (21) prépositionnée ou la partie supérieure (19) prépositionnée par rapport à la partie centrale (17) prépositionnée.

6. Dispositif selon l'une des revendications 3 à 5, dans lequel le dispositif de retenue (39) de la troisième station d'assemblage (103) est conçu pour faire tourner la structure de charpente (73) prépositionnée autour d'un axe longitudinal (75) de celle-ci.

7. Dispositif selon l'une des revendications précédentes 3 à 6, dans lequel le dispositif de retenue (31, 35) d'au moins l'une des première et deuxième stations d'assemblage (101, 102) est conçue pour maintenir passivement des composants de charpente respectifs (5, 61A, 61B, 61C) ou des pièces latérales (301, 303, 305) de manière fixe.

8. Dispositif selon l'une quelconque des revendications précédentes 3 à 7, dans lequel le dispositif de retenue (31, 35) d'au moins l'une des première et deuxième stations d'assemblage (101, 102) comporte au moins un robot de manutention (313, 321, 38) conçu pour déplacer activement des composants de charpente (5, 61A, 61B, 61C) ou des pièces latérales (301, 303, 305) respectifs.

9. Dispositif selon la revendication 8, dans lequel au moins l'une des première et deuxième stations d'assemblage (101, 102) comprend en outre au moins un magasin de pièces (59) pour le stockage et la fourniture d'éléments pour les composants de charpente (5), et dans lequel le robot de manutention (313, 321, 38) est conçu pour retirer des éléments du magasin de pièces (59) et pour les amener, de manière ciblée à une position prédéterminée, sur le dispositif de retenue (31, 35).

10. Dispositif selon l'une quelconque des revendications précédentes 3 à 9, dans lequel la première station d'assemblage (101) comprend :
- deux premiers dispositifs de retenue (307) destinés à maintenir respectivement des composants de charpente de la partie inférieure (21) ou de la partie supérieure (19), et
- un robot de soudage (309) associé à un premier dispositif de retenue (307), destiné à souder les composants de charpente (5) de la partie inférieure (21) ou de la partie supérieure (19) respectivement sur deux pièces latérales (303R, 303L) de la partie inférieure et sur deux pièces latérales (301R, 301L) de la partie supérieure de la charpente (3) ;
- un robot de manutention (313) associé à un premier dispositif de retenue (307) conçu pour déplacer activement des composants de charpente (5) respectifs de la partie inférieure (21) ou de la partie supérieure (19),
- un deuxième dispositif de retenue (315) destiné à maintenir des composants de charpente (5) de la partie centrale (17), et
- deux robots de soudage (319) associés au deuxième dispositif de retenue (315), destinés à souder les composants de charpente (5) de la partie centrale (17) à deux pièces latérales (305R, 305L) de la partie centrale de la charpente ;
- deux robots de manutention (321) associés au deuxième dispositif de retenue (315) et conçus pour déplacer activement des composants de charpente (5) respectifs de la partie centrale (17).

11. Dispositif selon l'une quelconque des revendications 3 à 10 précédentes, dans lequel le robot de soudage (33, 37, 41) d'au moins l'une des première, deuxième et troisième stations d'assemblage (101, 102, 103, 309, 319) comporte une tête de soudage (310) destinée à effectuer le soudage, et est conçu pour déplacer la tête de soudage (310) au moins avec trois degrés de liberté de mouvement de translation, de préférence trois degrés de liberté de mouvement de translation et trois degrés de liberté de mouvement de rotation.

12. Dispositif selon l'une quelconque des revendications 3 à 11 précédentes, dans lequel le robot de soudage (101, 102, 103, 309, 319) d'au moins l'une des première, deuxième et troisième stations d'assemblage (101, 102, 103) est conçue pour changer sa propre position par translation dans une direction (324) parallèle à une direction d'extension longitudinale de la partie inférieure (21), de la partie centrale (17) et de la partie supérieure (19).

13. Dispositif selon l'une quelconque des revendications précédentes, comprenant en outre une station de pré-assemblage (110) comportant
- au moins un dispositif de retenue (43) destiné à maintenir des composants bruts (47) et des composants de montage (49) à fixer à ceux-ci, et
- au moins un robot de soudage (45) destiné à souder les composants bruts (47) et les composants de montage (49) à fixer à ceux-ci sur des composants de charpente (5).

14. Dispositif selon la revendication 13, dans lequel le dispositif de retenue (43) de la station de pré-assemblage (110) est conçu pour faire tourner ensemble les composants bruts (47) et des composants de montage (49) à fixer à ceux-ci autour d'un axe de rotation (57).

15. Chaîne de production (200) pour la fabrication d'ossatures porteuses (1) pour des installations de transport de personnes, comportant des dispositifs selon l'une des revendications 4 à 14, la chaîne de production comprenant :
des premières stations d'assemblage (101) comportant
- deux premiers dispositifs de retenue (307) destinés à maintenir des éléments de charpente (5) de la partie inférieure (21) ou de la partie supérieure (19), et
- un robot de soudage (309) respectif associé à chaque premier dispositif de retenue (307), destiné à souder les composants de charpente (5) de la partie inférieure (21) ou de la partie supérieure (19) respectivement sur deux pièces latérales (303R, 303L) de la partie inférieure (21) et sur deux pièces latérales (301R, 301L) de la partie supérieure (19) de la charpente (3) ;
- un robot de manutention (313) associé à chaque premier dispositif de retenue (307), conçu pour déplacer activement des composants de charpente (5) respectifs de la partie inférieure (21) ou de la partie supérieure (19),
- trois deuxièmes dispositifs de retenue (315) destinés à maintenir des composants de charpente (5) de la partie centrale (17), et
- deux robots de soudage (319) respectifs associés à chaque deuxième dispositif de retenue (315), destinés à souder les composants de charpente (5) de la partie centrale (17) sur deux pièces latérales (305R, 305L) de la partie centrale (17) de la charpente (3) ;
- deux robots de manutention (321) respectifs associés à chaque deuxième dispositif de retenue (315) et conçus pour manipuler des composants de charpente (5) respectifs de la partie centrale (17) en mouvement actif ;
des deuxièmes stations d'assemblage (102) comportant
- trois dispositifs de retenue (35) destinés à maintenir les deux pièces latérales (303) respectives de la partie inférieure (21), les deux pièces latérales (305) de la partie centrale (17) et les deux pièces latérales (301) de la partie supérieure (19), et à maintenir d'autres composants de charpente (61A, 61B, 61C) disposés de manière adjacente respectivement entre les pièces latérales (301, 303, 305) de la partie inférieure (21), de la partie centrale (17) et de la partie supérieure (19), et
deux robots de soudage (37) associés à chaque dispositif de retenue (35), destinés à souder en position les autres composants de charpente (61A, 61B, 61C) présentant les pièces latérales (301, 303, 305) respectivement disposées de manière adjacente de la partie inférieure (21), de la partie centrale (17) ou de la partie supérieure (17), respectivement sur une partie inférieure (21) prépositionnée, sur une partie centrale (17) prépositionnée et sur une partie supérieure (19) prépositionnée, et à souder en position la partie inférieure (21) prépositionnée et la partie supérieure (19) prépositionnée, respectivement à des extrémités opposées de la partie centrale (17) prépositionnée, sur l'ensemble d'une structure de charpente (73) prépositionnée ;
- deux robots de manipulation (38) respectifs associés à chaque dispositif de retenue (35), conçus pour déplacer activement les composants de charpente (61A, 61B, 61C) respectifs ;
des troisièmes stations d'assemblage (103) comportant
- trois dispositifs de retenue (39), chacun étant destiné à maintenir l'une des structures de charpente (73) prépositionnées dans son ensemble,
- deux robots de soudage (41) respectifs associés à chaque dispositif de retenue (39), destinés à souder en position les composants de charpente (5) de la structure de charpente (73) prédéterminée respective dans son ensemble sur la charpente (3) porteuse de charge.
